(19) Europäisches Patentamt
European Patent Office
Office européen des brevets

(11) **EP 4 716 116 A1**

(12) **EUROPEAN PATENT APPLICATION**
published in accordance with Art. 153(4) EPC

(43) Date of publication:
**25.03.2026 Bulletin 2026/13**

(21) Application number: **23942867.5**

(22) Date of filing: **29.06.2023**

(51) International Patent Classification (IPC):
*H04B 10/516* *(2013.01)*

(52) Cooperative Patent Classification (CPC):
**H04B 10/516**

(86) International application number:
**PCT/CN2023/103923**

(87) International publication number:
**WO 2025/000357 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **LING, Yun
Shenzhen, Guangdong 518129 (CN)**
• **WANG, Tianxiang
Shenzhen, Guangdong 518129 (CN)**

(74) Representative: **Gill Jennings & Every LLP
The Broadgate Tower
20 Primrose Street
London EC2A 2ES (GB)**

(54) **SIGNAL TRANSMISSION METHOD AND DEVICE**

(57)    A signal transmission method and an apparatus are provided. In the method, a first communication apparatus converts a first radio frequency electrical signal into a unipolar-envelope modulated signal, and sends a first radio frequency optical signal to a second communication apparatus. The first radio frequency optical signal is a unipolar-envelope radio frequency optical signal that is obtained by performing optical modulation on the unipolar-envelope modulated signal and whose lower envelope is flat and lower envelope amplitude is less than or equal to a first value. A carrier wave in the unipolar-envelope modulated signal is a sine wave. In addition, the unipolar-envelope modulated signal is a radio frequency electrical signal with a flat lower envelope, and an upper envelope of the unipolar-envelope modulated signal corresponds to an upper envelope of the first radio frequency electrical signal; or the unipolar-envelope modulated signal is a radio frequency electrical signal with a flat upper envelope, and a lower envelope of the unipolar-envelope modulated signal corresponds to a lower envelope of the first radio frequency electrical signal. This manner can reduce a transmit optical power between the first communication apparatus and the second communication apparatus, and help reduce power consumption of an optical component and a nonlinear effect in fiber optics transmission.

FIG. 12

## Description

### TECHNICAL FIELD

This application relates to the field of communication technologies, and in particular, to a signal transmission method and an apparatus.

### BACKGROUND

As wireless base stations in the future evolve toward multi-band sharing, extremely large-scale arrays, and ultra-wide bandwidth, data amounts in conventional digital wireless fronthaul sharply increase. In addition, because a base station needs to perform a great deal of digital-to-analog conversion/analog-to-digital conversion and data processing, power consumption of the base station also increases sharply with a data amount. A radio frequency technology and a photonic technology are combined in use, to generate, transmit, detect, and process a radio frequency signal by using the photonic technology, and implement direct optical transmission of the radio frequency signal. This helps reduce digital-to-analog conversion/analog-to-digital conversion and simplify a data processing procedure, to improve transmission efficiency and reduce power consumption of a base station.

On a downlink of wireless fronthaul, electrical-to-optical conversion may be performed on a radio frequency electrical signal to obtain a radio frequency optical signal, and then the radio frequency optical signal is transmitted through a fiber. Next, optical-to-electrical conversion is performed on the radio frequency optical signal to obtain the radio frequency electrical signal, and the obtained radio frequency electrical signal is output to an antenna for radiation. A radio frequency radiation power of the antenna can be increased by increasing a transmit optical power of the radio frequency optical signal, but a high transmit optical power leads to a sharp increase in power consumption of an optical component on the link and severe signal distortion that is caused by a severe nonlinear effect in fiber optics transmission.

### SUMMARY

Embodiments of this application provide a signal transmission method and an apparatus, to decrease a transmit optical power, and help reduce power consumption of an optical component and a nonlinear effect in fiber optics transmission and implement a high radio frequency radiation power of an antenna by using a low transmit optical power.

According to a first aspect, an embodiment of this application provides a signal transmission method. The method may be applied to a first communication apparatus, may be applied to a chip in the first communication apparatus, or may be applied to a logical module or software that can implement all or a part of functions of the first communication apparatus. The following uses the first communication apparatus as an example for description. The signal transmission method includes: The first communication apparatus converts a first radio frequency electrical signal into a unipolar-envelope modulated signal, where an upper envelope and a lower envelope of the first radio frequency electrical signal are symmetric with respect to a direct current component, and a carrier wave in the unipolar-envelope modulated signal is a sine wave. The first communication apparatus sends a first radio frequency optical signal, where the first radio frequency optical signal is a unipolar-envelope radio frequency optical signal that is obtained by performing optical modulation on the unipolar-envelope modulated signal and whose lower envelope is flat and lower envelope amplitude is less than or equal to a first value. The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

It can be learned that a flat upper envelope or a flat lower envelope of the unipolar-envelope modulated signal is conducive to enabling the first radio frequency optical signal obtained based on the unipolar-envelope modulated signal to have a flat lower envelope and a lower envelope amplitude close to 0, in other words, a power value corresponding to the lower envelope of the first radio frequency optical signal is close to 0. Compared with an optical signal obtained by performing optical modulation on the first radio frequency electrical signal (a waveform of the optical signal is the same as a waveform of the first radio frequency electrical signal, and an upper envelope and a lower envelope of the optical signal are symmetric), the first radio frequency optical signal obtained based on the unipolar-envelope modulated signal has a lower average optical power, so that a transmit optical power between the first communication apparatus and a second communication apparatus can be reduced, to help reduce power consumption of an optical component. In addition, in a scenario in which the optical signal is transmitted between the first communication apparatus and the second communication apparatus through a fiber, the reduction of the transmit optical power further helps reduce a nonlinear effect in fiber optics transmission, to reduce signal distortion caused by the nonlinear effect in the fiber optics transmission. In a scenario in which the second communication apparatus further outputs the first radio frequency electrical signal to an antenna for signal radiation, the signal transmission method helps achieve a high radio frequency radiation power of the antenna by using a low transmit optical power.

In an optional implementation, the first radio frequency electrical signal is determined based on a baseband signal. That the first communication apparatus converts the first radio frequency electrical signal into the unipolar-envelope modulated signal includes: The first communication apparatus determines the unipolar-envelope modulated signal based on the first radio frequency electrical signal and a first electrical signal. The first electrical signal is a baseband amplitude signal corresponding to the baseband signal, or the first electrical signal is an electrical signal obtained by inverting a baseband amplitude signal corresponding to the baseband signal.

In an optional implementation, that the first communication apparatus determines the unipolar-envelope modulated signal based on the first radio frequency electrical signal and the first electrical signal includes: The first communication apparatus superimposes the first electrical signal onto the first radio frequency electrical signal to obtain the unipolar-envelope modulated signal. It can be learned that the first communication apparatus may obtain the unipolar-envelope modulated signal by adding the baseband amplitude signal to the first radio frequency electrical signal or subtracting the baseband amplitude signal from the first radio frequency electrical signal, to help obtain the first radio frequency optical signal having a low average optical power, and therefore reduce the transmit optical power between the first communication apparatus and the second communication apparatus. In addition, the baseband amplitude signal is spectrally separated from the first radio frequency electrical signal, and the operation of superimposing the first electrical signal onto the first radio frequency electrical signal by the first communication apparatus causes little damage to the first radio frequency electrical signal, and is easy to implement in a baseband.

In an optional implementation, the first electrical signal is time-synchronized with the first radio frequency electrical signal, and an amplitude of the first electrical signal is the same as an envelope amplitude of the first radio frequency electrical signal.

In an optional implementation, that the first communication apparatus converts the first radio frequency electrical signal into the unipolar-envelope modulated signal includes: The first communication apparatus converts the first radio frequency electrical signal into a second radio frequency electrical signal, where the second radio frequency electrical signal is a positive half-amplitude signal or a negative half-amplitude signal of the first radio frequency electrical signal with respect to the direct current component. The first communication apparatus filters the second radio frequency electrical signal to obtain a baseband signal and a fundamental frequency signal in the second radio frequency electrical signal. The first communication apparatus adjusts spectral amplitudes of the baseband signal and the fundamental frequency signal to obtain the unipolar-envelope modulated signal. The unipolar-envelope modulated signal includes an adjusted baseband signal and an adjusted fundamental frequency signal, and a difference between an amplitude of a baseband component and an amplitude of a fundamental frequency component in a spectrum corresponding to the unipolar-envelope modulated signal is less than or equal to a second value.

It can be learned that the first communication apparatus may first convert the first radio frequency electrical signal as a full-wave signal into the second radio frequency electrical signal as a half-wave signal, and then perform filtering processing and spectral amplitude adjustment processing on the second radio frequency electrical signal as a half-wave signal, to obtain the unipolar-envelope modulated signal. This manner may be implemented on a radio frequency link, and does not include baseband processing, so that impact of the baseband processing on the signal can be reduced.

In an optional implementation, the method further includes: The first communication apparatus superimposes a first bias electrical signal onto the unipolar-envelope modulated signal by using an optical modulator. The first communication apparatus performs, by using the optical modulator, optical modulation on the unipolar-envelope modulated signal superimposed with the first bias electrical signal, to obtain the first radio frequency optical signal.

In an optional implementation, the optical modulator is a directly modulated laser, the first bias electrical signal is a first bias current signal, a current corresponding to the first bias current signal is greater than or equal to a threshold current of the directly modulated laser, and the current corresponding to the first bias current signal is less than a first current.

In an optional implementation, the optical modulator is an electro-absorption modulator or a Mach-Zehnder modulator, the first bias electrical signal is a first bias voltage signal, and a voltage corresponding to the first bias voltage signal is greater than a first voltage. In a scenario in which the optical modulator is the electro-absorption modulator or the Mach-Zehnder modulator, a light source may be generated by additionally using a laser diode, and the electro-absorption modulator or the Mach-Zehnder modulator implements the optical modulation based on the light source generated by the laser diode. It can be learned that the generation of the light source and the optical modulation are implemented by different components. This helps reduce impact of a bandwidth of the light source on high-frequency modulation when the voltage corresponding to the first bias voltage signal is low.

In an optional implementation, the method further includes: The first communication apparatus generates the first radio frequency electrical signal.

According to a second aspect, an embodiment of this application provides a signal transmission method. The method may be applied to a second communication apparatus, may be applied to a chip in the second communication apparatus, or may be applied to a logical module or software that can implement all or a part of functions of the second communication apparatus. The following uses the second communication apparatus as an example for description. The signal transmission method includes: The second communication apparatus receives a first radio frequency optical signal, where the first radio frequency optical signal is a unipolar-envelope radio frequency optical signal that is obtained by performing optical modulation on a unipolar-envelope modulated signal and whose lower envelope is flat and lower envelope amplitude is less than or equal to a first value, and a carrier wave in the unipolar-envelope modulated signal is a sine wave. The second communication apparatus converts the first radio frequency optical signal into a first radio frequency electrical signal, where an upper envelope and a lower envelope of the first radio frequency electrical signal are symmetric with respect to a direct current component. The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

It can be learned that a flat upper envelope or a flat lower envelope of the unipolar-envelope modulated signal is conducive to enabling the first radio frequency optical signal obtained based on the unipolar-envelope modulated signal to have a flat lower envelope and a lower envelope amplitude close to 0, in other words, a power value corresponding to the lower envelope of the first radio frequency optical signal is close to 0. Compared with an optical signal obtained by performing optical modulation on the first radio frequency electrical signal (a waveform of the optical signal is the same as a waveform of the first radio frequency electrical signal, and an upper envelope and a lower envelope of the optical signal are symmetric), the first radio frequency optical signal obtained based on the unipolar-envelope modulated signal has a lower average optical power, so that a transmit optical power between a first communication apparatus and the second communication apparatus can be reduced, to help reduce power consumption of an optical component. In addition, in a scenario in which the optical signal is transmitted between the first communication apparatus and the second communication apparatus through a fiber, the reduction of the transmit optical power further helps reduce a nonlinear effect in fiber optics transmission, to reduce signal distortion caused by the nonlinear effect in the fiber optics transmission.

In addition, the second communication apparatus further converts the first radio frequency optical signal with a low average optical power into the first radio frequency electrical signal with a high power. In a scenario in which the second communication apparatus further needs to output the first radio frequency electrical signal to an antenna for signal radiation, the signal transmission method can achieve a high radio frequency radiation power of the antenna by using a low transmit optical power.

In an optional implementation, the first radio frequency electrical signal that is converted from the first radio frequency optical signal is a fundamental frequency signal in the unipolar-envelope modulated signal obtained by performing optical-to-electrical conversion on the first radio frequency optical signal.

In an optional implementation, that the second communication apparatus converts the first radio frequency optical signal into the first radio frequency electrical signal includes: The second communication apparatus performs optical-to-electrical conversion on the first radio frequency optical signal by using a photoelectric detector to obtain the unipolar-envelope modulated signal, where a passband of the photoelectric detector covers a spectrum of the fundamental frequency signal. The second communication apparatus filters the unipolar-envelope modulated signal by using a band-pass filter to obtain the first radio frequency electrical signal, where a passband of the band-pass filter includes only the spectrum of the fundamental frequency signal. It can be learned that the second communication apparatus may recover the first radio frequency electrical signal from the first radio frequency optical signal by using the photoelectric detector and the band-pass filter, without performing complex algorithm processing. This simplifies a manner of recovering the first radio frequency electrical signal.

In an optional implementation, that the second communication apparatus converts the first radio frequency optical signal into the first radio frequency electrical signal includes: The second communication apparatus performs optical-to-electrical conversion on the first radio frequency optical signal by using a photoelectric detector to obtain the unipolar-envelope modulated signal, and determines the first radio frequency electrical signal from the unipolar-envelope modulated signal, where a passband of the photoelectric detector includes only a spectrum of the fundamental frequency signal. It can be learned that, when the photoelectric detector has both an optical-to-electrical conversion function and a function of obtaining the fundamental frequency signal through filtering, the second communication apparatus may directly recover the first radio frequency electrical signal from the first radio frequency optical signal by using the photoelectric detector, without performing complex algorithm processing. This simplifies a manner of recovering the first radio frequency electrical signal.

According to a third aspect, an embodiment of this application provides a signal transmission method. The method is described from a perspective of interaction between a first communication apparatus and a second communication apparatus. The method includes: The first communication apparatus converts a first radio frequency electrical signal into a unipolar-envelope modulated signal, where an upper envelope and a lower envelope of the first radio frequency electrical signal are symmetric with respect to a direct current component, and a carrier wave in the unipolar-envelope modulated signal is a sine wave. The first communication apparatus sends a first radio frequency optical signal, where the first radio frequency optical signal is a unipolar-envelope radio frequency optical signal that is obtained by performing optical modulation on the unipolar-envelope modulated signal and whose lower envelope is flat and lower envelope amplitude is less than or equal to a first value. The second communication apparatus receives the first radio frequency optical signal. The second communication apparatus converts the first radio frequency optical signal into the first radio frequency electrical signal.

The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

It can be learned that a flat upper envelope or a flat lower envelope of the unipolar-envelope modulated signal is conducive to enabling the first radio frequency optical signal obtained based on the unipolar-envelope modulated signal to have a flat lower envelope and a lower envelope amplitude close to 0, in other words, a power value corresponding to the lower envelope of the first radio frequency optical signal is close to 0. Compared with an optical signal obtained by performing optical modulation on the first radio frequency electrical signal (a waveform of the optical signal is the same as a waveform of the first radio frequency electrical signal, and an upper envelope and a lower envelope of the optical signal are symmetric), the first radio frequency optical signal obtained based on the unipolar-envelope modulated signal has a lower average optical power, so that a transmit optical power between the first communication apparatus and the second communication apparatus can be reduced, to help reduce power consumption of an optical component. In addition, in a scenario in which the optical signal is transmitted between the first communication apparatus and the second communication apparatus through a fiber, the reduction of the transmit optical power further helps reduce a nonlinear effect in fiber optics transmission, to reduce signal distortion caused by the nonlinear effect in the fiber optics transmission.

In addition, the second communication apparatus further converts the first radio frequency optical signal with a low average optical power into the first radio frequency electrical signal with a high power. In a scenario in which the second communication apparatus further needs to output the first radio frequency electrical signal to an antenna for signal radiation, the signal transmission method can achieve a high radio frequency radiation power of the antenna by using a low transmit optical power.

In an optional implementation, the first radio frequency electrical signal is determined based on a baseband signal. That the first communication apparatus converts the first radio frequency electrical signal into the unipolar-envelope modulated signal includes: The first communication apparatus determines the unipolar-envelope modulated signal based on the first radio frequency electrical signal and a first electrical signal. The first electrical signal is a baseband amplitude signal corresponding to the baseband signal, or the first electrical signal is an electrical signal obtained by inverting a baseband amplitude signal corresponding to the baseband signal.

In an optional implementation, that the first communication apparatus determines the unipolar-envelope modulated signal based on the first radio frequency electrical signal and the first electrical signal includes: The first communication apparatus superimposes the first electrical signal onto the first radio frequency electrical signal to obtain the unipolar-envelope modulated signal.

In an optional implementation, the first electrical signal is time-synchronized with the first radio frequency electrical signal, and an amplitude of the first electrical signal is the same as an envelope amplitude of the first radio frequency electrical signal.

In an optional implementation, that the first communication apparatus converts the first radio frequency electrical signal into the unipolar-envelope modulated signal includes: The first communication apparatus converts the first radio frequency electrical signal into a second radio frequency electrical signal, where the second radio frequency electrical signal is a positive half-amplitude signal or a negative half-amplitude signal of the first radio frequency electrical signal with respect to the direct current component. The first communication apparatus filters the second radio frequency electrical signal to obtain a baseband signal and a fundamental frequency signal in the second radio frequency electrical signal. The first communication apparatus adjusts spectral amplitudes of the baseband signal and the fundamental frequency signal to obtain the unipolar-envelope modulated signal. The unipolar-envelope modulated signal includes an adjusted baseband signal and an adjusted fundamental frequency signal, and a difference between an amplitude of a baseband component and an amplitude of a fundamental frequency component in a spectrum corresponding to the unipolar-envelope modulated signal is less than or equal to a second value.

In an optional implementation, the method further includes: The first communication apparatus superimposes a first bias electrical signal onto the unipolar-envelope modulated signal by using an optical modulator. The first communication apparatus performs, by using the optical modulator, optical modulation on the unipolar-envelope modulated signal superimposed with the first bias electrical signal, to obtain the first radio frequency optical signal.

In an optional implementation, the optical modulator is a directly modulated laser, the first bias electrical signal is a first bias current signal, a current corresponding to the first bias current signal is greater than or equal to a threshold current of the directly modulated laser, and the current corresponding to the first bias current signal is less than a first current.

In an optional implementation, the optical modulator is an electro-absorption modulator or a Mach-Zehnder modulator, the first bias electrical signal is a first bias voltage signal, and a voltage corresponding to the first bias voltage signal is greater than a first voltage.

In an optional implementation, the method further includes: The first communication apparatus generates the first radio frequency electrical signal.

In an optional implementation, the first radio frequency electrical signal that is converted by the second communication apparatus from the first radio frequency optical signal is a fundamental frequency signal in the unipolar-envelope modulated signal obtained by the second communication apparatus by performing optical-to-electrical conversion on the first radio frequency optical signal.

In an optional implementation, that the second communication apparatus converts the first radio frequency optical signal into the first radio frequency electrical signal includes: The second communication apparatus performs optical-to-electrical conversion on the first radio frequency optical signal by using a photoelectric detector to obtain the unipolar-envelope modulated signal, where a passband of the photoelectric detector covers a spectrum of the fundamental frequency signal in the unipolar-envelope modulated signal. The second communication apparatus filters the unipolar-envelope modulated signal by using a band-pass filter to obtain the first radio frequency electrical signal, where a passband of the band-pass filter includes only the spectrum of the fundamental frequency signal in the unipolar-envelope modulated signal.

In an optional implementation, that the second communication apparatus converts the first radio frequency optical signal into the first radio frequency electrical signal includes: The second communication apparatus performs optical-to-electrical conversion on the first radio frequency optical signal by using a photoelectric detector to obtain the unipolar-envelope modulated signal, and determines the first radio frequency electrical signal from the unipolar-envelope modulated signal, where a passband of the photoelectric detector includes only a spectrum of the fundamental frequency signal in the unipolar-envelope modulated signal.

In addition, in this aspect, for beneficial effects of the foregoing optional implementations, refer to beneficial effects of related implementations in the first aspect and the second aspect. Details are not described again.

According to a fourth aspect, an embodiment of this application provides a communication apparatus. The apparatus includes a coupling module and an optical modulator.

The coupling module is configured to: superimpose a first electrical signal onto a first radio frequency electrical signal to obtain a unipolar-envelope modulated signal, and output the unipolar-envelope modulated signal to the optical modulator, where the first radio frequency electrical signal is determined based on a baseband signal, an upper envelope and a lower envelope of the first radio frequency electrical signal are symmetric with respect to a direct current component, and a carrier wave in the unipolar-envelope modulated signal is a sine wave.

The optical modulator is configured to perform optical modulation on the unipolar-envelope modulated signal to obtain a first radio frequency optical signal, where the first radio frequency optical signal is a unipolar-envelope radio frequency optical signal whose lower envelope is flat and lower envelope amplitude is less than or equal to a first value.

The optical modulator is further configured to send the first radio frequency optical signal.

The first electrical signal is a baseband amplitude signal corresponding to the baseband signal, or the first electrical signal is an electrical signal obtained by inverting a baseband amplitude signal corresponding to the baseband signal. The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

It can be learned that the coupling module may add the baseband amplitude signal to the first radio frequency electrical signal or subtract the baseband amplitude signal from the first radio frequency electrical signal to obtain the unipolar-envelope modulated signal, and then the optical modulator obtains the first radio frequency optical signal based on the unipolar-envelope modulated signal. A flat upper envelope or a flat lower envelope of the unipolar-envelope modulated signal is conducive to enabling the first radio frequency optical signal obtained based on the unipolar-envelope modulated signal to have a flat lower envelope and a lower envelope amplitude close to 0, in other words, a power value corresponding to the lower envelope of the first radio frequency optical signal is close to 0. Compared with an optical signal obtained by performing optical modulation on the first radio frequency electrical signal (a waveform of the optical signal is the same as a waveform of the first radio frequency electrical signal, and an upper envelope and a lower envelope of the optical signal are symmetric), the first radio frequency optical signal obtained based on the unipolar-envelope modulated signal has a lower average optical power, so that a transmit optical power can be reduced, to help reduce power consumption of an optical component. In addition, in a scenario in which the first radio frequency optical signal is transmitted through a fiber, the reduction of the transmit optical power further helps reduce a nonlinear effect in fiber optics transmission, to reduce signal distortion caused by the nonlinear effect in the fiber optics transmission.

In an optional implementation, the first electrical signal is time-synchronized with the first radio frequency electrical signal, and an amplitude of the first electrical signal is the same as an envelope amplitude of the first radio frequency electrical signal.

In an optional implementation, for the performing optical modulation on the unipolar-envelope modulated signal to obtain the first radio frequency electrical signal, the optical modulator is specifically configured to: superimpose a first bias electrical signal onto the unipolar-envelope modulated signal, and perform optical modulation on the unipolar-envelope modulated signal superimposed with the first bias electrical signal, to obtain the first radio frequency optical signal.

In an optional implementation, the optical modulator is a directly modulated laser, the first bias electrical signal is a first bias current signal, a current corresponding to the first bias current signal is greater than or equal to a threshold current of the directly modulated laser, and the current corresponding to the first bias current signal is less than a first current.

In an optional implementation, the optical modulator is an electro-absorption modulator or a Mach-Zehnder modulator, the first bias electrical signal is a first bias voltage signal, and a voltage corresponding to the first bias voltage signal is greater than a first voltage.

In an optional implementation, the apparatus further includes a baseband module. The baseband module is configured to: generate the first electrical signal, and output the first electrical signal to the coupling module. The baseband module is further configured to: generate the first radio frequency electrical signal, and output the first radio frequency electrical signal to the coupling module.

In an optional implementation, the apparatus further includes a baseband module and an up-conversion module. The baseband module is configured to: generate the first electrical signal, and output the first electrical signal to the coupling module. The baseband module is further configured to: generate the baseband signal or an intermediate frequency signal corresponding to the baseband signal, and output the baseband signal or the intermediate frequency signal corresponding to the baseband signal to the up-conversion module. The up-conversion module is configured to: perform up-conversion processing on the baseband signal or the intermediate frequency signal corresponding to the baseband signal to obtain the first radio frequency electrical signal, and output the first radio frequency electrical signal to the coupling module.

In addition, in this aspect, for beneficial effects of the foregoing optional implementations, refer to beneficial effects of related implementations in the first aspect. Details are not described again.

According to a fifth aspect, an embodiment of this application provides a communication apparatus. The apparatus includes a low-noise power amplifier, a low-pass filter, and an optical modulator.

The low-noise power amplifier is configured to: convert a first radio frequency electrical signal into a second radio frequency electrical signal, and output the second radio frequency electrical signal to the low-pass filter, where an upper envelope and a lower envelope of the first radio frequency electrical signal are symmetric with respect to a direct current component, and the second radio frequency electrical signal is a positive half-amplitude signal or a negative half-amplitude signal of the first radio frequency electrical signal with respect to the direct current component.

The low-pass filter is configured to: filter the second radio frequency electrical signal to obtain a baseband signal and a fundamental frequency signal in the second radio frequency electrical signal, adjust spectral amplitudes of the baseband signal and the fundamental frequency signal to obtain a unipolar-envelope modulated signal, and output the unipolar-envelope modulated signal to the optical modulator, where a carrier wave in the unipolar-envelope modulated signal is a sine wave.

The optical modulator is configured to perform optical modulation on the unipolar-envelope modulated signal to obtain a first radio frequency optical signal, where the first radio frequency optical signal is a unipolar-envelope radio frequency optical signal whose lower envelope is flat and lower envelope amplitude is less than or equal to a first value.

The optical modulator is further configured to send the first radio frequency optical signal.

The unipolar-envelope modulated signal includes an adjusted baseband signal and an adjusted fundamental frequency signal, and a difference between an amplitude of a baseband component and an amplitude of a fundamental frequency component in a spectrum corresponding to the unipolar-envelope modulated signal is less than or equal to a second value. The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

It can be learned that the low-pass filter may first convert the first radio frequency electrical signal as a full-wave signal into the second radio frequency electrical signal as a half-wave signal, and then perform filtering processing and spectral amplitude adjustment processing on the second radio frequency electrical signal to obtain the unipolar-envelope modulated signal. Next, the optical modulator obtains the first radio frequency optical signal based on the unipolar-envelope modulated signal. A flat upper envelope or a flat lower envelope of the unipolar-envelope modulated signal is conducive to enabling the first radio frequency optical signal obtained based on the unipolar-envelope modulated signal to have a flat lower envelope and a lower envelope amplitude close to 0, in other words, a power value corresponding to the lower envelope of the first radio frequency optical signal is close to 0. Compared with an optical signal obtained by performing optical modulation on the first radio frequency electrical signal (a waveform of the optical signal is the same as a waveform of the first radio frequency electrical signal, and an upper envelope and a lower envelope of the optical signal are symmetric), the first radio frequency optical signal obtained based on the unipolar-envelope modulated signal has a lower average optical power, so that a transmit optical power can be reduced, to help reduce power consumption of an optical component. In addition, in a scenario in which the first radio frequency optical signal is transmitted through a fiber, the reduction of the transmit optical power further helps reduce a nonlinear effect in fiber optics transmission, to reduce signal distortion caused by the nonlinear effect in the fiber optics transmission.

In an optional implementation, the low-noise power amplifier is a class-B low-noise power amplifier, a class-AB low-noise power amplifier, or a class-C low-noise power amplifier.

In an optional implementation, for the performing optical modulation on the unipolar-envelope modulated signal to obtain the first radio frequency optical signal, the optical modulator is specifically configured to: superimpose a first bias electrical signal onto the unipolar-envelope modulated signal, and perform optical modulation on the unipolar-envelope modulated signal superimposed with the first bias electrical signal, to obtain the first radio frequency optical signal.

In an optional implementation, the optical modulator is a directly modulated laser, the first bias electrical signal is a first bias current signal, a current corresponding to the first bias current signal is greater than or equal to a threshold current of the directly modulated laser, and the current corresponding to the first bias current signal is less than a first current.

In an optional implementation, the optical modulator is an electro-absorption modulator or a Mach-Zehnder modulator, the first bias electrical signal is a first bias voltage signal, and a voltage corresponding to the first bias voltage signal is greater than a first voltage.

In an optional implementation, the apparatus further includes a baseband module. The baseband module is configured to: generate the first radio frequency electrical signal, and output the first radio frequency electrical signal to the low-noise power amplifier.

In an optional implementation, the apparatus further includes a baseband module and an up-conversion module. The baseband module is configured to: generate the baseband signal or an intermediate frequency signal corresponding to the baseband signal, and output the baseband signal or the intermediate frequency signal corresponding to the baseband signal to the up-conversion module. The up-conversion module is configured to: perform up-conversion processing on the baseband signal or the intermediate frequency signal corresponding to the baseband signal to obtain the first radio frequency electrical signal, and output the first radio frequency electrical signal to the low-noise power amplifier.

In addition, in this aspect, for beneficial effects of the foregoing optional implementations, refer to beneficial effects of related implementations in the first aspect. Details are not described again.

According to a sixth aspect, an embodiment of this application provides a communication apparatus. The apparatus includes a photoelectric detector and a band-pass filter.

The photoelectric detector is configured to receive a first radio frequency optical signal, where the first radio frequency optical signal is a unipolar-envelope radio frequency optical signal that is obtained by performing optical modulation on a unipolar-envelope modulated signal and whose lower envelope is flat and lower envelope amplitude is less than or equal to a first value, and a carrier wave in the unipolar-envelope modulated signal is a sine wave.

The photoelectric detector is further configured to: perform optical-to-electrical conversion on the first radio frequency optical signal to obtain the unipolar-envelope modulated signal, and output the unipolar-envelope modulated signal to the band-pass filter, where a passband of the photoelectric detector covers a spectrum of a fundamental frequency signal in the unipolar-envelope modulated signal.

The band-pass filter is configured to filter the unipolar-envelope modulated signal to obtain a first radio frequency electrical signal, where a passband of the band-pass filter includes only the spectrum of the fundamental frequency signal in the unipolar-envelope modulated signal, and an upper envelope and a lower envelope of the first radio frequency electrical signal are symmetric with respect to a direct current component.

The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

It can be learned that the photoelectric detector and the band-pass filter recover the first radio frequency electrical signal from the first radio frequency optical signal. This simplifies a manner of recovering the first radio frequency electrical signal. A flat upper envelope or a flat lower envelope of the unipolar-envelope modulated signal is conducive to enabling the first radio frequency optical signal obtained based on the unipolar-envelope modulated signal to have a flat lower envelope and a lower envelope amplitude close to 0, in other words, a power value corresponding to the lower envelope of the first radio frequency optical signal is close to 0. Compared with an optical signal obtained by performing optical modulation on the first radio frequency electrical signal (a waveform of the optical signal is the same as a waveform of the first radio frequency electrical signal, and an upper envelope and a lower envelope of the optical signal are symmetric), the first radio frequency optical signal obtained based on the unipolar-envelope modulated signal has a lower average optical power, so that a transmit optical power can be reduced, to help reduce power consumption of an optical component. In addition, in a scenario in which the optical signal is transmitted through a fiber, the reduction of the transmit optical power further helps reduce a nonlinear effect in fiber optics transmission, to reduce signal distortion caused by the nonlinear effect in the fiber optics transmission. In addition, the communication apparatus further converts the first radio frequency optical signal with a low average optical power into the first radio frequency electrical signal with a high power. In a scenario in which the communication apparatus further needs to output the first radio frequency electrical signal to an antenna for signal radiation, a high radio frequency radiation power of the antenna can be achieved by using a low transmit optical power.

According to a seventh aspect, an embodiment of this application provides a communication apparatus. The apparatus includes a photoelectric detector.

The photoelectric detector is configured to receive a first radio frequency optical signal, where the first radio frequency optical signal is a unipolar-envelope radio frequency optical signal that is obtained by performing optical modulation on a unipolar-envelope modulated signal and whose lower envelope is flat and lower envelope amplitude is less than or equal to a first value, and a carrier wave in the unipolar-envelope modulated signal is a sine wave.

The photoelectric detector is further configured to: perform optical-to-electrical conversion on the first radio frequency optical signal to obtain the unipolar-envelope modulated signal, and determine a first radio frequency electrical signal from the unipolar-envelope modulated signal, where a passband of the photoelectric detector includes only a spectrum of a fundamental frequency signal in the unipolar-envelope modulated signal, and an upper envelope and a lower envelope of the first radio frequency electrical signal are symmetric with respect to a direct current component.

The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

It can be learned that, the photoelectric detector has both an optical-to-electrical conversion function and a function of obtaining the fundamental frequency signal through filtering, and the photoelectric detector may recover the first radio frequency electrical signal from the first radio frequency optical signal, without performing complex algorithm processing. This simplifies a manner of recovering the first radio frequency electrical signal. A flat upper envelope or a flat lower envelope of the unipolar-envelope modulated signal is conducive to enabling the first radio frequency optical signal obtained based on the unipolar-envelope modulated signal to have a flat lower envelope and a lower envelope amplitude close to 0, in other words, a power value corresponding to the lower envelope of the first radio frequency optical signal is close to 0. Compared with an optical signal obtained by performing optical modulation on the first radio frequency electrical signal (a waveform of the optical signal is the same as a waveform of the first radio frequency electrical signal, and an upper envelope and a lower envelope of the optical signal are symmetric), the first radio frequency optical signal obtained based on the unipolar-envelope modulated signal has a lower average optical power, so that a transmit optical power can be reduced, to help reduce power consumption of an optical component. In addition, in a scenario in which the optical signal is transmitted through a fiber, the reduction of the transmit optical power further helps reduce a nonlinear effect in fiber optics transmission, to reduce signal distortion caused by the nonlinear effect in the fiber optics transmission. In addition, the communication apparatus further converts the first radio frequency optical signal with a low average optical power into the first radio frequency electrical signal with a high power. In a scenario in which the communication apparatus further needs to output the first radio frequency electrical signal to an antenna for signal radiation, a high radio frequency radiation power of the antenna can be achieved by using a low transmit optical power.

According to an eighth aspect, this application further provides a communication apparatus. The communication apparatus may be a first communication apparatus, a module or unit (for example, a chip, a chip system, or a circuit) that is in the first communication apparatus and that performs, in one-to-one correspondence, the method/operation/step/action described in the first aspect, or an apparatus that can be used in collaboration with the first communication apparatus. The communication apparatus has a function of implementing a part or all of the implementations of the first aspect. Alternatively, the communication apparatus may be a second communication apparatus, a module or unit (for example, a chip, a chip system, or a circuit) that is in the second communication apparatus and that performs, in one-to-one correspondence, the method/operation/step/action described in the second aspect, or an apparatus that can be used in collaboration with the second communication apparatus. The communication apparatus has a function of implementing a part or all of the implementations of the second aspect. The function may be implemented by hardware, or may be implemented by hardware executing corresponding software. The hardware or the software includes one or more units or modules corresponding to the foregoing function.

In a possible design, a structure of the communication apparatus may include a processing unit and a communication unit. The processing unit is configured to support the communication apparatus to perform a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit. The processing unit is configured to control the communication unit to receive and send data/signaling.

The processing unit is configured to convert a first radio frequency electrical signal into a unipolar-envelope modulated signal, where an upper envelope and a lower envelope of the first radio frequency electrical signal are symmetric with respect to a direct current component, and a carrier wave in the unipolar-envelope modulated signal is a sine wave.

The communication unit is configured to send a first radio frequency optical signal, where the first radio frequency optical signal is a unipolar-envelope radio frequency optical signal that is obtained by performing optical modulation on the unipolar-envelope modulated signal and whose lower envelope is flat and lower envelope amplitude is less than or equal to a first value.

The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

In addition, for another optional implementation of the communication apparatus in this aspect, refer to related content in the first aspect. Details are not described herein again.

In another implementation, the communication apparatus includes a communication unit and a processing unit. The processing unit is configured to control the communication unit to receive and send data/signaling.

The communication unit is configured to receive a first radio frequency optical signal, where the first radio frequency optical signal is a unipolar-envelope radio frequency optical signal that is obtained by performing optical modulation on a unipolar-envelope modulated signal and whose lower envelope is flat and lower envelope amplitude is less than or equal to a first value, and a carrier wave in the unipolar-envelope modulated signal is a sine wave.

The processing unit is configured to convert the first radio frequency optical signal into a first radio frequency electrical signal, where an upper envelope and a lower envelope of the first radio frequency electrical signal are symmetric with respect to a direct current component.

The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

In addition, for another optional implementation of the communication apparatus in this aspect, refer to related content in the second aspect. Details are not described herein again.

For example, the communication unit may be a transceiver, the storage unit may be a memory, and the processing unit may be a processor. The processor is coupled to the memory. The memory is configured to store a program or instructions. The processor may be configured to: when the program or the instructions are executed by the processor, enable the communication apparatus to perform the method according to the first aspect or the second aspect. The transceiver may be configured to receive and send a signal and/or data.

In an implementation, the communication apparatus includes a processor and a transceiver.

The processor is configured to convert a first radio frequency electrical signal into a unipolar-envelope modulated signal, where an upper envelope and a lower envelope of the first radio frequency electrical signal are symmetric with respect to a direct current component, and a carrier wave in the unipolar-envelope modulated signal is a sine wave.

The transceiver is configured to send a first radio frequency optical signal, where the first radio frequency optical signal is a unipolar-envelope radio frequency optical signal that is obtained by performing optical modulation on the unipolar-envelope modulated signal and whose lower envelope is flat and lower envelope amplitude is less than or equal to a first value.

The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

In addition, for another optional implementation of the communication apparatus in this aspect, refer to related content in the first aspect. Details are not described herein again.

In another implementation, the communication apparatus includes a processor and a transceiver.

The transceiver is configured to receive a first radio frequency optical signal, where the first radio frequency optical signal is a unipolar-envelope radio frequency optical signal that is obtained by performing optical modulation on a unipolar-envelope modulated signal and whose lower envelope is flat and lower envelope amplitude is less than or equal to a first value, and a carrier wave in the unipolar-envelope modulated signal is a sine wave.

The processor is configured to convert the first radio frequency optical signal into a first radio frequency electrical signal, where an upper envelope and a lower envelope of the first radio frequency electrical signal are symmetric with respect to a direct current component.

The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

In addition, for another optional implementation of the communication apparatus in this aspect, refer to related content in the second aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example but not limited to, baseband related processing; and the transceiver may be configured to perform, for example but not limited to, radio frequency receiving and sending. The foregoing components may be separately disposed on chips that are independent of each other, or at least a part or all of the components may be disposed on a same chip. For example, the processor may be further classified into an analog baseband processor and a digital baseband processor. The analog baseband processor and the transceiver (or a communication interface) may be integrated on a same chip, and the digital baseband processor may be disposed on an independent chip. With continuous development of an integrated circuit technology, increasingly more components may be integrated on a same chip. For example, the digital baseband processor and a plurality of types of application processors (for example but not limited to, a graphics processing unit and a multimedia processor) may be integrated on a same chip. The chip may be referred to as a system on a chip (System on a Chip, SoC). Whether the components are separately disposed on different chips or integrated on one or more chips usually depends on a requirement of a product design. Embodiments of this application impose no limitation on implementation forms of the foregoing components.

According to a ninth aspect, this application further provides a processor, configured to perform the foregoing methods. In a process of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver transmits the signal. After the foregoing signal is output by the processor, other processing may further need to be performed on the signal, and then the signal arrives at the transceiver. Similarly, when the processor receives the foregoing signal that is input, the transceiver receives the signal, and inputs the signal to the processor. Further, after the transceiver receives the signal, other processing may need to be performed on the signal, and then the signal is input to the processor.

Operations such as sending and receiving related to the processor may be more generally understood as operations such as output, receiving, and input of the processor unless otherwise specified or if the operations do not conflict with actual functions or internal logic of the operations in related descriptions, instead of sending and receiving operations directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in embodiments of this application.

According to a tenth aspect, this application further provides a communication system. The system includes the first communication apparatus and the second communication apparatus in the foregoing aspects. In another possible design, the system may further include another device that interacts with the first communication apparatus and/or the second communication apparatus in the solutions provided in this application.

According to an eleventh aspect, this application provides a computer-readable storage medium. The computer-readable storage medium stores a computer program; and when the computer program runs, the method according to the first aspect or the second aspect is performed.

According to a twelfth aspect, this application further provides a computer program product including instructions. The computer program product includes computer program code; and when the computer program code is run, the method according to the first aspect or the second aspect is performed.

According to a thirteenth aspect, this application provides a chip system. The chip system includes a processor and an interface, the interface is configured to obtain a program or instructions, and the processor is configured to invoke the program or the instructions to implement a function in the first aspect, or is configured to invoke the program or the instructions to implement a function in the second aspect. In a possible design, the chip system further includes a memory. The memory is configured to store program instructions and data that are necessary for a terminal. The chip system may include a chip, or may include a chip and another discrete component.

## BRIEF DESCRIPTION OF DRAWINGS

FIG. 1 is a diagram of a system architecture according to an embodiment of this application;
FIG. 2 is a diagram of optical modulation performed by an EAM according to an embodiment of this application;
FIG. 3 is a diagram of optical modulation performed by a DML according to an embodiment of this application;
FIG. 4 is a diagram of a radio frequency electrical signal according to an embodiment of this application;
FIG. 5 is a diagram of radio frequency fiber optics transmission according to an embodiment of this application;
FIG. 6 is a diagram of wireless optical communication according to an embodiment of this application;
FIG. 7 is a diagram of FTTR according to an embodiment of this application;
FIG. 8 is a diagram of a structure of a communication system according to an embodiment of this application;
FIG. 9 is a diagram of an envelope of a signal according to an embodiment of this application;
FIG. 10 is a diagram of a unipolar-envelope signal according to an embodiment of this application;
FIG. 11 is a diagram of another unipolar-envelope signal according to an embodiment of this application;
FIG. 12 is a schematic flowchart of a signal transmission method according to an embodiment of this application;
FIG. 13a is a diagram of a sine wave according to an embodiment of this application;
FIG. 13b is a diagram of an incomplete sine wave according to an embodiment of this application;
FIG. 14 is a diagram of a first radio frequency electrical signal according to an embodiment of this application;
FIG. 15a is a diagram of a first electrical signal according to an embodiment of this application;
FIG. 15b is a diagram of another first electrical signal according to an embodiment of this application;
FIG. 16 is a diagram of an electric energy spectrum of a unipolar-envelope modulated signal according to an embodiment of this application;
FIG. 17 is a diagram of converting a first radio frequency electrical signal into a unipolar-envelope modulated signal according to an embodiment of this application;
FIG. 18 is a diagram of a second radio frequency electrical signal according to an embodiment of this application;
FIG. 19a is a diagram of a spectrum corresponding to a second radio frequency electrical signal according to an embodiment of this application;
FIG. 19b is a diagram of a spectrum corresponding to a unipolar-envelope modulated signal according to an embodiment of this application;
FIG. 20a is a diagram of a first radio frequency optical signal according to an embodiment of this application;
FIG. 20b is a diagram of an optical signal obtained by performing optical modulation on a first radio frequency electrical signal according to an embodiment of this application;
FIG. 21 is a diagram of performing optical modulation on a unipolar-envelope modulated signal according to an embodiment of this application;
FIG. 22 is another diagram of performing optical modulation on a unipolar-envelope modulated signal according to an embodiment of this application;
FIG. 23 is a diagram of a first communication apparatus 2300 according to an embodiment of this application;
FIG. 24 is another diagram of the first communication apparatus 2300 according to this embodiment of this application;
FIG. 25 is another diagram of the first communication apparatus 2300 according to this embodiment of this application;
FIG. 26 is a diagram of obtaining a first radio frequency optical signal by a first communication apparatus based on a digital baseband signal according to an embodiment of this application;
FIG. 27 is a diagram of a first communication apparatus 2700 according to an embodiment of this application;
FIG. 28 is another diagram of the first communication apparatus 2700 according to this embodiment of this application;
FIG. 29 is another diagram of the first communication apparatus 2700 according to this embodiment of this application;
FIG. 30 is a diagram of a second communication apparatus 3000 according to an embodiment of this application;
FIG. 31 is a diagram of a second communication apparatus 3100 according to an embodiment of this application;
FIG. 32 is a diagram of obtaining a first radio frequency electrical signal by a second communication apparatus based on a first radio frequency optical signal according to an embodiment of this application;
FIG. 33 is a diagram of a structure of a communication apparatus 3300 according to an embodiment of this application;

FIG. 34 is a diagram of a structure of a communication apparatus 3400 according to an embodiment of this application; and

FIG. 35 is a diagram of a structure of a communication apparatus 3500 according to an embodiment of this application.

## DESCRIPTION OF EMBODIMENTS

The following describes embodiments of this application with reference to the accompanying drawings in embodiments of this application.

First, to better understand a signal transmission method disclosed in embodiments of this application, a communication system to which embodiments of this application are applicable is described.

Technical solutions in embodiments of this application may be applied to various communication systems, for example, a global system for mobile communications, a long term evolution (long term evolution, LTE) system, a universal mobile telecommunications system, a 4th generation (4th generation, 4G) mobile communication technology system, a next-generation radio access network (next-generation radio access network, NG-RAN), a new radio (new radio, NR) system, and a 5th generation mobile communication technology (5th generation, 5G) system. With continuous development of communication technologies, the technical solutions in embodiments of this application may be further applied to a subsequent evolved communication system, for example, a 6th generation mobile communication technology (6th generation, 6G) system or a 7th generation mobile communication technology (7th generation, 7G) system.

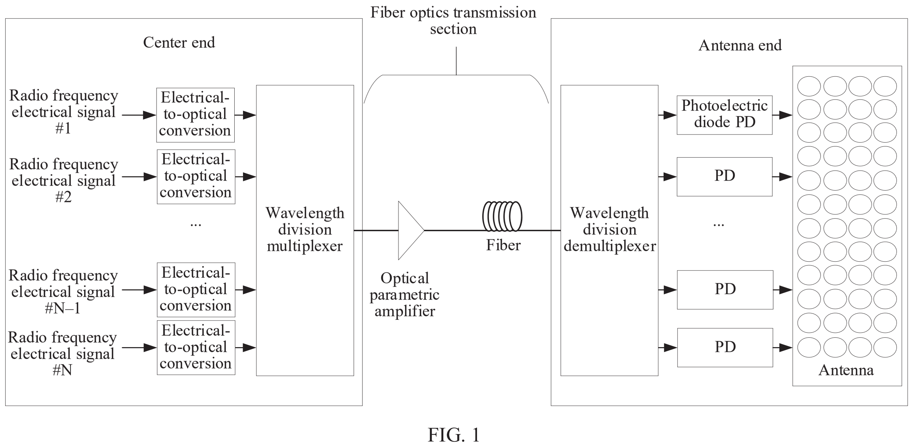

The technical solutions in embodiments of this application may be applied to a radio access scenario that is based on radio frequency optical transmission. For example, the technical solutions may be applied to a wireless fronthaul system, a wireless base station system, or a wireless access point system. For another example, the technical solutions may be applied to a downlink with a high optical power in a radio frequency optical transmission system. FIG. 1 is a diagram of a system architecture according to an embodiment of this application. The system architecture may include a center end, a fiber optics transmission section, and an antenna end. The center end may be configured to generate a radio frequency electrical signal, convert the radio frequency electrical signal into a radio frequency optical signal, and implement wavelength division multiplexing of radio frequency channels. The fiber optics transmission section may be configured to implement transmission and amplification of a radio frequency optical signal. The antenna end may be configured to implement wavelength division demultiplexing, convert a radio frequency optical signal into a radio frequency electrical signal, and transmit the radio frequency electrical signal through an antenna.

For example, the center end may include an electrical-to-optical conversion component and a wavelength division multiplexer, the fiber optics transmission section may include an optical parametric amplifier (optical parametric amplifier, OPA) and a fiber (Fiber), and the antenna end may include a wavelength division demultiplexer, a photoelectric diode (photoelectric diode, PD), and the antenna. The electrical-to-optical conversion component may be configured to convert a radio frequency electrical signal into a radio frequency optical signal. The electrical-to-optical conversion component may be, for example, a directly modulated laser (directly modulated laser, DML), an electro-absorption modulator (electroabsorption-modulated laser, EAM), or a Mach-Zehnder modulator (Mach-Zehnder modulator, MZM). The wavelength division multiplexer may be configured to multiplex optical signals of different wavelengths, and the wavelength division demultiplexer may be configured to demultiplex an optical signal having a plurality of wavelengths. The optical parametric amplifier may be configured to amplify an optical power of an optical signal. The fiber may connect the center end to the antenna end, and is configured to implement long-distance low-loss transmission of a radio frequency optical signal. The PD may be configured to convert a radio frequency optical signal into a radio frequency electrical signal. The antenna may be configured to implement spatial radiation and reception of a radio frequency electrical signal.

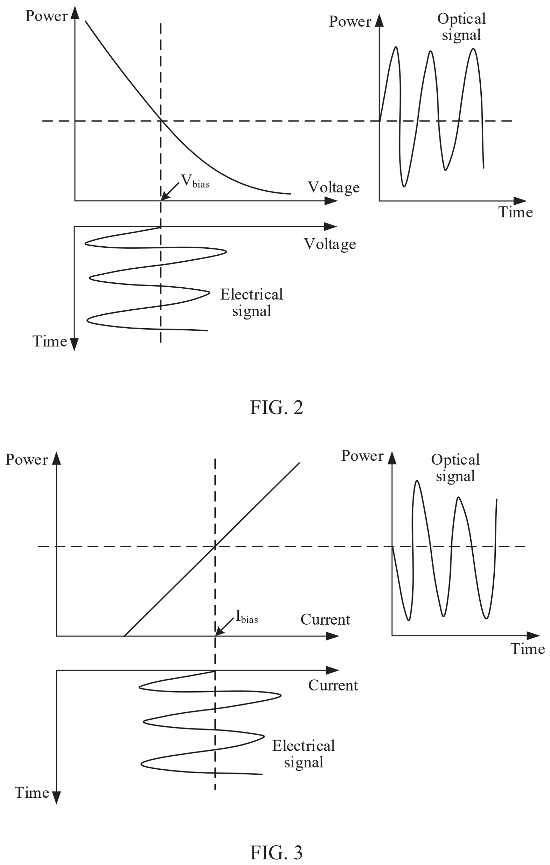

The EAM and the MZM implement optical modulation by changing a voltage, and the DML implements optical modulation by changing a current. Using an example in which a direct current component of a radio frequency electrical signal that is input to the EAM or the DML is 0, FIG. 2 is a diagram of optical modulation performed by the EAM according to an embodiment of this application, and FIG. 3 is a diagram of optical modulation performed by the DML according to an embodiment of this application. In FIG. 2, a power-voltage curve represents a relationship between an operating voltage of the EAM and an optical power, a voltage-time curve represents an electrical signal obtained by superimposing a bias voltage signal (a voltage corresponding to the bias voltage signal is $V_{bias}$) onto the radio frequency electrical signal that is input to the EAM, and a power-time curve represents a radio frequency optical signal obtained by the EAM by performing optical modulation on the radio frequency electrical signal obtained by superimposing the bias voltage signal. In FIG. 3, a power-current curve represents a relationship between an operating current of the DML and an optical power, a current-time curve represents an electrical signal obtained by superimposing a bias current signal (a current corresponding to the bias current signal is $I_{bias}$) onto the radio frequency electrical signal that is input to the DML, and a power-time curve represents a radio frequency optical signal obtained by the DML by performing optical modulation on the radio frequency electrical signal obtained by superimposing the bias current signal.

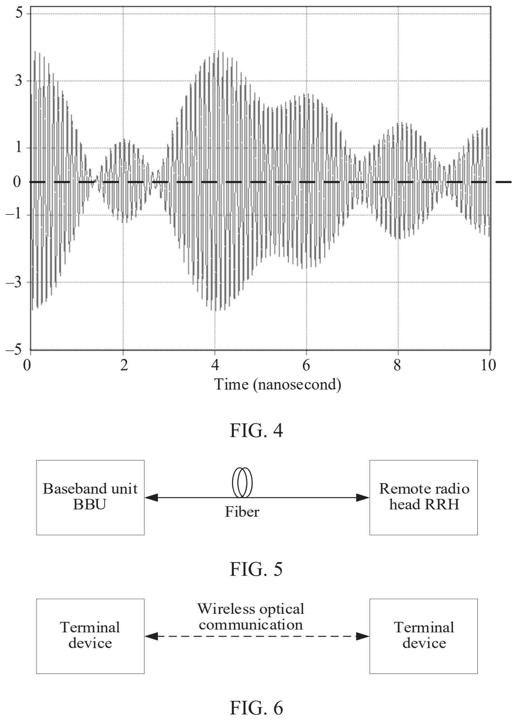

The following uses the optical modulation performed by the EAM in FIG. 2 as an example for description. The optical modulation performed by the DML is similar to the optical modulation performed by the EAM, and details are not described. With reference to FIG. 2, the bias voltage signal is applied to the EAM, so that a bias voltage of the EAM is the voltage corresponding to the bias voltage signal. In this case, when the EAM performs optical modulation, the operating voltage of the EAM is set based on the electrical signal represented by the voltage-time curve in FIG. 2 (namely, the electrical signal obtained by superimposing the bias voltage signal onto the radio frequency electrical signal that is input to the EAM), and the radio frequency optical signal represented by the power-time curve in FIG. 2 may be obtained. If the voltage corresponding to the bias voltage signal is set to an appropriate value (in other words, the bias voltage of the EAM is set to an appropriate value), to cause the operating voltage of the EAM to fall within a linear region of the power-voltage curve, the EAM may perform linear optical modulation, and the optical signal obtained through the optical modulation may have a same waveform as the complete radio frequency electrical signal that is input to the EAM. For example, a radio frequency electrical signal shown in FIG. 4 is input to the EAM, and the bias voltage of the EAM is set to an intermediate voltage in the linear region of the power-voltage curve. In this case, a radio frequency optical signal whose waveform is the same as or approximately the same as a complete waveform of the radio frequency electrical signal shown in FIG. 4 may be obtained by the EAM by performing optical modulation.

The technical solutions in embodiments of this application may be further applied to a radio frequency optical communication scenario, including a radio frequency fiber optics transmission scenario and a wireless optical communication scenario. For example, the radio frequency fiber optics transmission scenario is shown in FIG. 5. The radio frequency fiber optics transmission scenario may include a baseband unit (baseband unit, BBU) and a remote radio head (remote radio head, RRH). The BBU communicates with the RRH through a fiber. In a scenario, the BBU may convert a first radio frequency electrical signal into a unipolar-envelope modulated signal, and send a first radio frequency optical signal obtained by performing optical modulation on the unipolar-envelope modulated signal. The RRH converts the received first radio frequency optical signal into the first radio frequency electrical signal. In another scenario, the RRH may convert a first radio frequency electrical signal into a unipolar-envelope modulated signal, and send a first radio frequency optical signal obtained by performing optical modulation on the unipolar-envelope modulated signal. The BBU converts the received first radio frequency optical signal into the first radio frequency electrical signal.

For example, the wireless optical communication scenario is shown in FIG. 6. The wireless optical communication scenario may include two terminal devices in wireless optical communication. One of the two terminal devices may be configured to convert a first radio frequency electrical signal into a unipolar-envelope modulated signal, and send a first radio frequency optical signal obtained by performing optical modulation on the unipolar-envelope modulated signal. The other terminal device may be configured to convert the received first radio frequency optical signal into the first radio frequency electrical signal. In embodiments of this application, the terminal device may also be referred to as user equipment (user equipment, UE), a terminal (terminal), an access terminal, a subscriber unit (subscriber unit), a subscriber station, a mobile station (mobile station, MS), a remote station, a remote terminal, a mobile device, a user terminal, a user agent, or a user apparatus. Alternatively, the terminal device may be a virtual reality (virtual reality, VR) terminal device, an augmented reality (augmented reality, AR) terminal device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

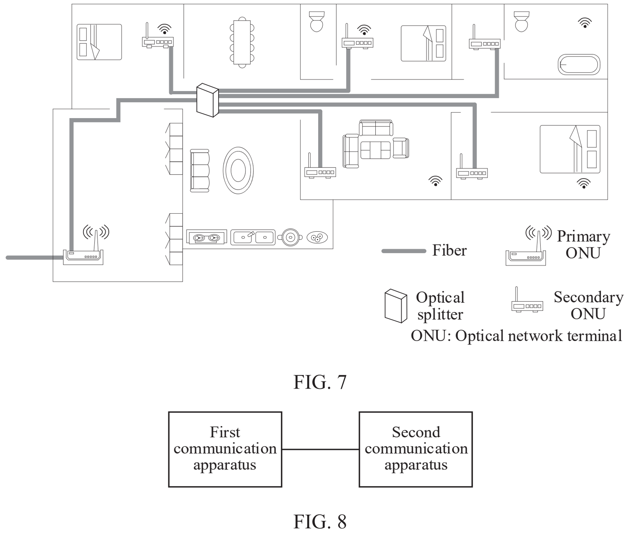

The technical solutions in embodiments of this application may be further applied to a centralized Wi-Fi access network (centralized Wi-Fi access network, C-WAN) of fiber to the room (fiber to the room, FTTR) or a C-WAN of fiber to the radio (fiber to the radio). For example, the technical solutions may be applied to a radio frequency downlink with a high optical power from a primary optical network terminal (optical network unit, ONU) to a secondary ONU in FTTR, as shown in FIG. 7. In addition, the technical solutions provided in embodiments of this application not only can support transmission of a radio frequency signal for communication, but also can support transmission of a radio frequency signal for sensing.

FIG. 8 is a diagram of a structure of a communication system according to an embodiment of this application. The communication system includes a first communication apparatus and a second communication apparatus. The first communication apparatus may be configured to: convert a first radio frequency electrical signal into a unipolar-envelope modulated signal, and send a first radio frequency optical signal obtained by performing optical modulation on the unipolar-envelope modulated signal. The second communication apparatus may be configured to: receive the first radio frequency optical signal, and convert the first radio frequency optical signal into the first radio frequency electrical signal. The communication system may further include a channel, for example, a fiber, space, or another transmission medium, that is between the first communication apparatus and the second communication apparatus and that is for transmitting the first radio frequency optical signal. Single-wavelength transmission or wavelength division multiplexing transmission may be performed on a fiber optics transmission link for transmitting an optical signal through a fiber, and the fiber optics transmission link may include the fiber, an optical parametric amplifier, a wavelength division multiplexer, a wavelength division demultiplexer, and the like. In addition, in embodiments of this application, the first communication apparatus may also be referred to as a radio frequency light generation module, and the second communication apparatus may also be referred to as a radio frequency recovery module.

For example, the first communication apparatus may be the center end in the system architecture shown in FIG. 1 or may be deployed at the center end, and the second communication apparatus may be the antenna end in the system architecture shown in FIG. 1 or may be deployed at the antenna end. Alternatively, the first communication apparatus may be the BBU in FIG. 5 or may be deployed in the BBU, and the second communication apparatus may be the RRH in FIG. 5 or may be deployed in the RRH. Alternatively, the first communication apparatus may be the RRH in FIG. 5 or may be deployed in the RRH, and the second communication apparatus may be the BBU in FIG. 5 or may be deployed in the BBU. Alternatively, the first communication apparatus may be a terminal device in FIG. 6 or may be deployed in the terminal device, and the second communication apparatus may be the other terminal device in FIG. 6 or may be deployed in the other terminal device. Alternatively, the first communication apparatus may be the primary ONU in FIG. 7 or may be deployed in the primary ONU, and the second communication apparatus may be the secondary ONU in FIG. 7 or may be deployed in the secondary ONU. In addition, the first communication apparatus and the second communication apparatus may alternatively be other devices to which the technical solutions are applicable in an application scenario of the technical solutions in embodiments of this application, or the first communication apparatus and the second communication apparatus may be deployed in other devices to which the technical solutions are applicable in an application scenario of the technical solutions in embodiments of this application. This is not limited.

Next, related concepts in embodiments of this application are briefly described.

1. Envelope of a signal

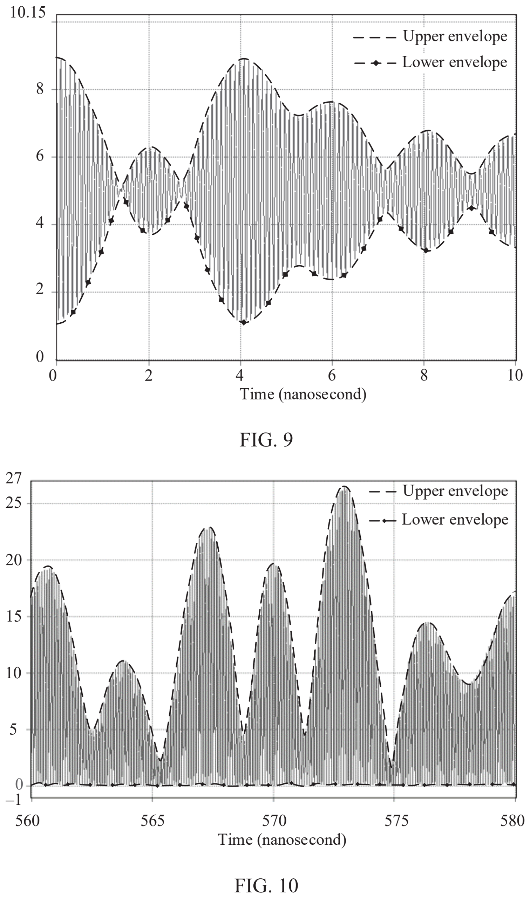

The envelope of the signal is obtained by smoothly connecting extreme points of the signal. An upper envelope of the signal is obtained by smoothly connecting maximal points of the signal, and a lower envelope of the signal is obtained by smoothly connecting minimal points of the signal. For example, with reference to FIG. 9, an upper envelope shown by a black dashed line without black rectangles in FIG. 9 may be obtained by smoothly connecting maximal points of a signal in FIG. 9, and a lower envelope shown by a black dashed line with black rectangles in FIG. 9 may be obtained by smoothly connecting minimal points of the signal in FIG. 9.

An envelope amplitude of a signal may be represented based on a direct current component of the signal. For example, an amplitude corresponding to the direct current component of the signal is $r_0$, and the signal has a maximal value $r_1$ at a moment $t_1$, and has a minimal value $r_2$ at a moment $t_2$. In this case, an upper envelope amplitude of the signal at the moment $t_1$ is $r_1$-$r_0$, and a lower envelope amplitude of the signal at the moment $t_2$ is $r_2$-$r_0$. If the direct current component of the signal is 0, in other words, $r_0$=0, the upper envelope amplitude of the signal at the moment $t_1$ is $r_1$, and the lower envelope amplitude of the signal at the moment $t_2$ is $r_2$.

2. Unipolar-envelope signal

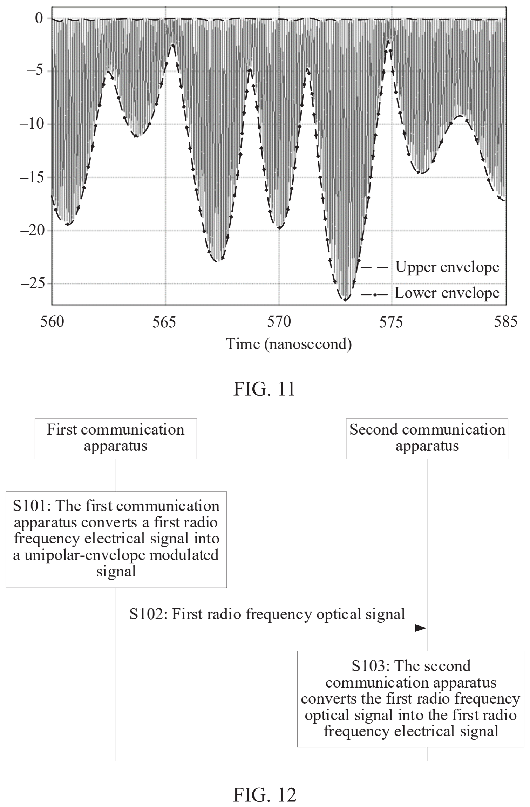

The unipolar-envelope signal is a signal whose lower envelope is flat and upper envelope obviously fluctuates or a signal whose upper envelope is flat and lower envelope obviously fluctuates. It can be learned that the upper envelope and the lower envelope of the unipolar-envelope signal are asymmetric with respect to a direct current component. For example, as shown in FIG. 10 and FIG. 11, a lower envelope of a unipolar-envelope signal shown in FIG. 10 is flat, and an upper envelope of the signal obviously fluctuates; and an upper envelope of a unipolar-envelope signal shown in FIG. 11 is flat, and a lower envelope of the signal obviously fluctuates.

In addition, a unipolar-envelope signal as a radio frequency electrical signal may also be referred to as a unipolar-envelope radio frequency electrical signal, and a unipolar-envelope signal as a radio frequency optical signal may also be referred to as a unipolar-envelope radio frequency optical signal. In embodiments of this application, the unipolar-envelope modulated signal is a unipolar-envelope radio frequency electrical signal, and the first radio frequency optical signal is a unipolar-envelope radio frequency optical signal.

3. Full-wave signal and half-wave signal

The full-wave signal is a signal whose waveform is envelope-symmetric with respect to a direct current component, in other words, an upper envelope and a lower envelope of the full-wave signal are symmetric with respect to the direct current component. For example, the signal shown in FIG. 4 is envelope-symmetric with respect to a direct current component shown by a black dashed line. Therefore, the signal shown in FIG. 4 is a full-wave signal.

The half-wave signal is a signal having a positive half-amplitude or a negative half-amplitude of a full-wave signal with respect to a direct current component. The positive half-amplitude of the full-wave signal with respect to the direct current component is an upper half-amplitude of the full-wave signal with respect to the direct current component, and is greater than or equal to an amplitude of the direct current component. The negative half-amplitude of the full-wave signal with respect to the direct current component is a lower half-amplitude of the full-wave signal with respect to the direct current component, and is less than or equal to the amplitude of the direct current component.

In embodiments of this application, the first radio frequency electrical signal is a full-wave signal, and a second radio frequency electrical signal is a half-wave signal.

The following describes embodiments of this application in detail with reference to the accompanying drawings. A corresponding method is illustrated in a schematic flowchart of this application by using an example in which a first communication apparatus and a second communication apparatus serve as execution entities of the interaction illustration. However, the execution entities of the interaction illustration are not limited in this application. For example, the first communication apparatus in the flowchart may alternatively be a chip, a chip system, or a processor that supports the first communication apparatus to implement the corresponding method, or may be a logical module or software that can implement all or a part of functions of the first communication apparatus. The second communication apparatus in the flowchart may alternatively be a chip, a chip system, or a processor that supports the second communication apparatus to implement the corresponding method, or may be a logical module or software that can implement all or a part of functions of the second communication apparatus.

FIG. 12 is a schematic flowchart of a signal transmission method according to an embodiment of this application. The signal transmission method is described from a perspective of interaction between a first communication apparatus and a second communication apparatus. The signal transmission method includes the following steps.

S101: The first communication apparatus converts a first radio frequency electrical signal into a unipolar-envelope modulated signal.

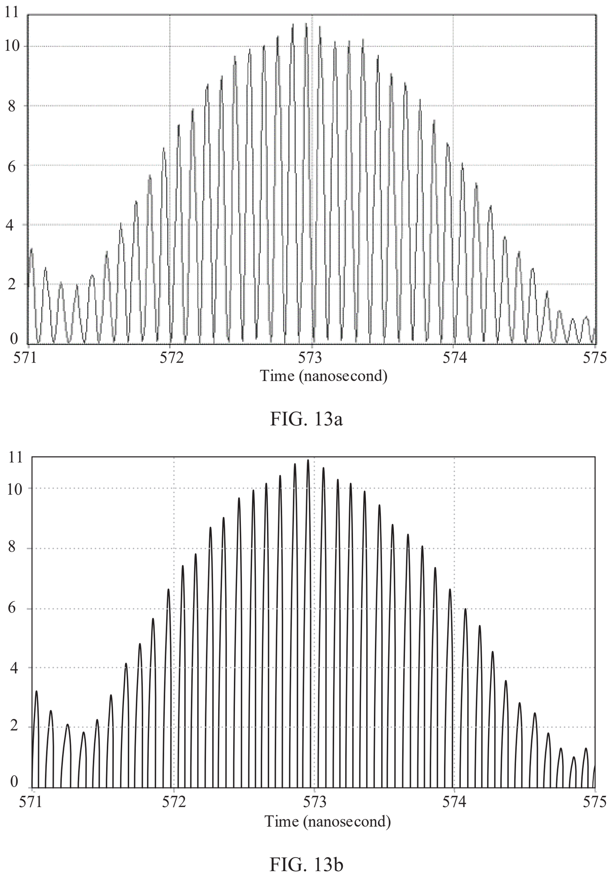

An upper envelope and a lower envelope of the first radio frequency electrical signal are symmetric with respect to a direct current component. A carrier wave in the unipolar-envelope modulated signal is a sine wave. To be specific, the carrier wave in the unipolar-envelope modulated signal is a complete periodic signal in each periodicity, and a signal waveform is a sine wave waveform. For example, the carrier wave in the unipolar-envelope modulated signal may be a sine wave that is complete in each periodicity and that is shown in FIG. 13a, instead of a sine wave that is incomplete in each periodicity and that is shown in FIG. 13b (there is only a part of a sine wave in a signal shown in FIG. 13b in each periodicity).

The unipolar-envelope modulated signal is a radio frequency electrical signal with a flat lower envelope, and an upper envelope of the unipolar-envelope modulated signal corresponds to the upper envelope of the first radio frequency electrical signal. Alternatively, the unipolar-envelope modulated signal is a radio frequency electrical signal with a flat upper envelope, and a lower envelope of the unipolar-envelope modulated signal corresponds to the lower envelope of the first radio frequency electrical signal. In embodiments of this application, that a lower envelope is flat does not merely mean that a lower envelope amplitude absolutely remains unchanged, but may alternatively mean that a lower envelope amplitude slightly changes. In embodiments of this application, that an upper envelope is flat does not merely mean that an upper envelope amplitude absolutely remains unchanged, but may alternatively mean that an upper envelope amplitude slightly changes.

It may be understood that, when the direct current component of the first radio frequency electrical signal is 0, an envelope signal of the unipolar-envelope modulated signal is unidirectionally modulated in a positive level direction or a negative level direction, and an amplitude of the envelope signal in the other level direction remains unchanged or slightly changes. Specifically, when the direct current component of the first radio frequency electrical signal is 0, and when the upper envelope of the unipolar-envelope modulated signal is flat, and the lower envelope of the unipolar-envelope modulated signal corresponds to the lower envelope of the first radio frequency electrical signal, it may indicate that the envelope signal of the unipolar-envelope modulated signal is unidirectionally modulated in the positive level direction, and a waveform of the unipolar-envelope modulated signal is shown in FIG. 10; or when the lower envelope of the unipolar-envelope modulated signal is flat, and the upper envelope of the unipolar-envelope modulated signal corresponds to the upper envelope of the first radio frequency electrical signal, it may indicate that the envelope signal of the unipolar-envelope modulated signal is unidirectionally modulated in the negative level direction, and waveform of the unipolar-envelope modulated signal is shown in FIG. 11. In addition, in this embodiment of this application, in a scenario in which the direct current component of the first radio frequency electrical signal is 0, when the lower envelope of the unipolar-envelope modulated signal is flat, and the upper envelope of the unipolar-envelope modulated signal corresponds to the upper envelope of the first radio frequency electrical signal, the unipolar-envelope modulated signal may also be referred to as a positive-direction unipolar-envelope modulated signal; or when the upper envelope of the unipolar-envelope modulated signal is flat, and the lower envelope of the unipolar-envelope modulated signal corresponds to the lower envelope of the first radio frequency electrical signal, the unipolar-envelope modulated signal may also be referred to as a negative-direction unipolar-envelope modulated signal.

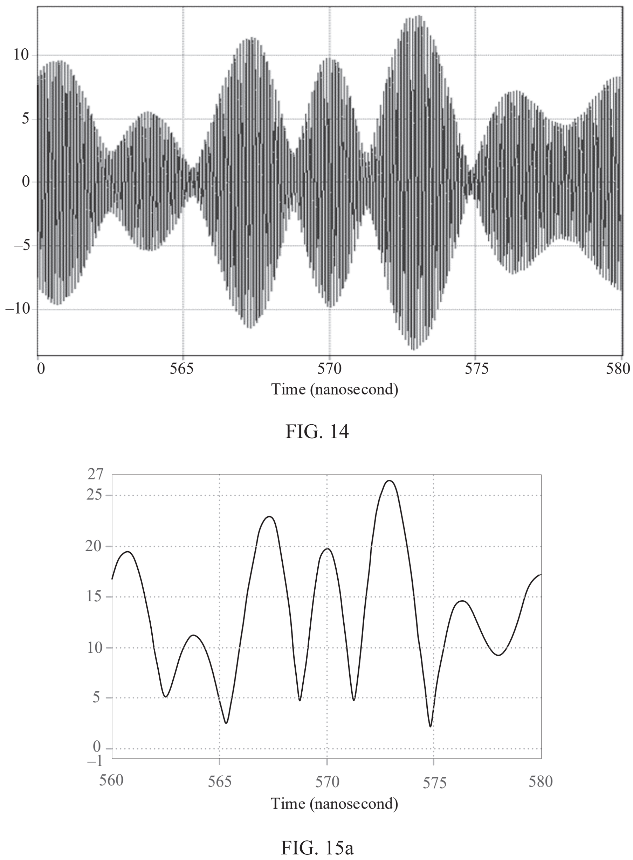

Optionally, that the upper envelope of the unipolar-envelope modulated signal corresponds to the upper envelope of the first radio frequency electrical signal may be specifically represented as: There is a multiple relationship between an upper envelope amplitude of the unipolar-envelope modulated signal and an upper envelope amplitude of the first radio frequency electrical signal. That the lower envelope of the unipolar-envelope modulated signal corresponds to the lower envelope of the first radio frequency electrical signal may be specifically represented as: There is a multiple relationship between a lower envelope amplitude of the unipolar-envelope modulated signal and a lower envelope amplitude of the first radio frequency electrical signal. For example, a direct current component of a first radio frequency electrical signal shown in FIG. 14 is 0, and an upper envelope and a lower envelope of the first radio frequency electrical signal are symmetric with respect to the direct current component. A unipolar-envelope modulated signal that is converted from the first radio frequency electrical signal shown in FIG. 14 may be shown in FIG. 10 or FIG. 11. A lower envelope of a unipolar-envelope modulated signal shown in FIG. 10 is flat, and an upper envelope amplitude of the unipolar-envelope modulated signal is twice an upper envelope amplitude of the first radio frequency electrical signal shown in FIG. 14. An upper envelope of a unipolar-envelope modulated signal shown in FIG. 11 is flat, and a lower envelope amplitude of the unipolar-envelope modulated signal is twice a lower envelope amplitude of the first radio frequency electrical signal shown in FIG. 14.

The following describes an optional manner in which the first communication apparatus converts the first radio frequency electrical signal into the unipolar-envelope modulated signal, as described in the following optional implementation 1.1 and implementation 1.2.

Implementation 1.1: That the first communication apparatus converts the first radio frequency electrical signal into the unipolar-envelope modulated signal may include: The first communication apparatus determines the unipolar-envelope modulated signal based on the first radio frequency electrical signal and a first electrical signal. The first radio frequency electrical signal is determined based on a baseband signal. The first electrical signal is a baseband amplitude signal corresponding to the baseband signal, or the first electrical signal is an electrical signal obtained by inverting a baseband amplitude signal corresponding to the baseband signal.

For example, the first radio frequency electrical signal $S_0(t)$ may be represented in the following formula (1):

$$\begin{aligned} S_0(t) &= I(t)\cos(\omega_{RF}t) + Q(t)\sin(\omega_{RF}t) \\ &= \sqrt{I^2(t) + Q^2(t)}\sin(\omega_{RF}t + \phi(t)) \\ &= A(t)\sin(\omega_{RF}t + \phi(t)) \end{aligned} \qquad (1)$$

$I(t)$ is an in-phase (In-phase) component ($I$ component for short) corresponding to the baseband signal, $Q(t)$ is a quadrature (quadrature) component ($Q$ component for short) corresponding to the baseband signal, $A(t)$ is the baseband amplitude signal corresponding to the baseband signal, $\phi(t)$ is a phase signal corresponding to the baseband signal, and $\omega_{RF}$ is a frequency of the radio frequency signal. It may be understood that the first electrical signal may be $A(t)$, or the first electrical signal may be $-A(t)$.

Optionally, that the first communication apparatus determines the unipolar-envelope modulated signal based on the first radio frequency electrical signal and the first electrical signal may include: The first communication apparatus superimposes the first electrical signal onto the first radio frequency electrical signal, to obtain the unipolar-envelope modulated signal. To be specific, the first communication apparatus may add the baseband amplitude signal corresponding to the baseband signal to the first radio frequency electrical signal, or subtract the baseband amplitude signal corresponding to the baseband signal from the first radio frequency electrical signal, to obtain the unipolar-envelope modulated signal. In addition, the baseband amplitude signal is spectrally separated from the first radio frequency electrical signal, and the operation of superimposing the first electrical signal onto the first radio frequency electrical signal by the first communication apparatus causes little damage to the first radio frequency electrical signal, and is easy to implement in a baseband.

For example, when the first radio frequency electrical signal $S_0(t)$ is represented in the foregoing formula (1), the unipolar-envelope modulated signal $S_1(t)$ may be represented in the following formula (2):

$$S_1(t) = A(t)\sin(\omega_{RF}t + \phi(t)) \pm A(t) = A(t)\big[\sin(\omega_{RF}t + \phi(t)) \pm 1\big] \qquad (2)$$

$A(t) \geq 0$. When $S_1(t) = A(t)[sin(\omega_{RF}t + \phi(t)) + 1]$, in other words, the first electrical signal is the baseband amplitude signal corresponding to the baseband signal, $S_1(t) \geq 0$, the lower envelope of the unipolar-envelope modulated signal is flat, and the upper envelope of the unipolar-envelope modulated signal corresponds to the upper envelope of the first radio frequency electrical signal. When $S_1(t) = A(t)[sin(\omega_{RF}t + \phi(t)) - 1]$, in other words, the first electrical signal is the electrical signal obtained by inverting the baseband amplitude signal corresponding to the baseband signal, $S_1(t) \leq 0$, the upper envelope of the unipolar-envelope modulated signal is flat, and the lower envelope of the unipolar-envelope modulated signal corresponds to the lower envelope of the first radio frequency electrical signal.

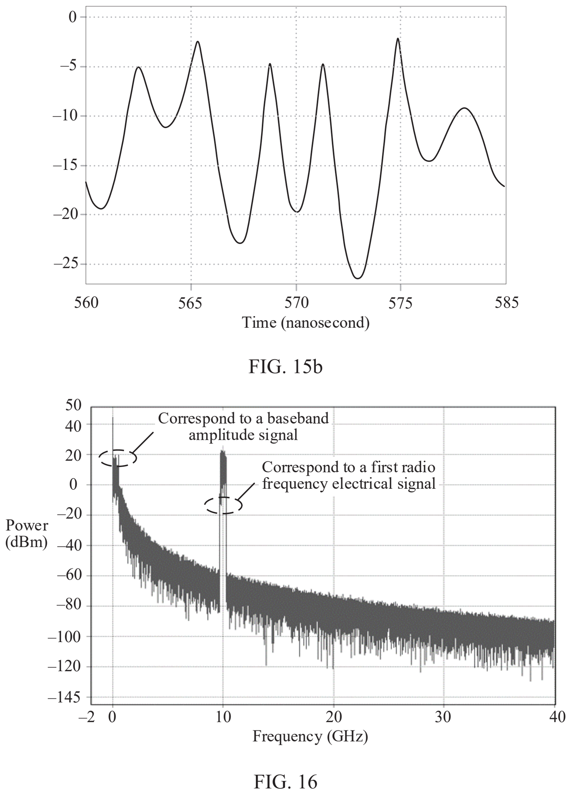

For example, the first electrical signal is the baseband amplitude signal corresponding to the baseband signal, the first communication apparatus may superimpose a first electrical signal (the first electrical signal is the baseband amplitude signal corresponding to the baseband signal) shown in FIG. 15a onto the first radio frequency electrical signal shown in FIG. 14, and a waveform of an obtained unipolar-envelope modulated signal is shown in FIG. 10. For another example, the first electrical signal is the electrical signal obtained by inverting the baseband amplitude signal corresponding to the baseband signal, the first communication apparatus may superimpose a first electrical signal (the first electrical signal is the electrical signal obtained by inverting the baseband amplitude signal corresponding to the baseband signal) shown in FIG. 15b onto the first radio frequency electrical signal shown in FIG. 14, and a waveform of an obtained unipolar-envelope modulated signal is shown in FIG. 11.

It may be understood that a spectrum corresponding to the unipolar-envelope modulated signal includes a baseband component corresponding to the baseband amplitude signal and a fundamental frequency component corresponding to the first radio frequency electrical signal. In the spectrum corresponding to the unipolar-envelope modulated signal, a difference between an amplitude of the baseband component and an amplitude of the fundamental frequency component is less than or equal to a second value. The second value may be small, in other words, the amplitude of the baseband component is the same as or close to the amplitude of the fundamental frequency component. Correspondingly, in an electric energy spectrum corresponding to the unipolar-envelope modulated signal, an amplitude corresponding to a frequency of the baseband amplitude signal is equal to or close to an amplitude corresponding to a frequency of the first radio frequency electrical signal. For example, the electric energy spectrum corresponding to the unipolar-envelope modulated signal may be shown in FIG. 16.

Optionally, the first electrical signal is time-synchronized with the first radio frequency electrical signal, and an amplitude of the first electrical signal is the same as an envelope amplitude of the first radio frequency electrical signal. Specifically, when the first electrical signal is the baseband amplitude signal corresponding to the baseband signal, the amplitude of the first electrical signal is the same as the upper envelope amplitude of the first radio frequency electrical signal; or when the first electrical signal is the electrical signal obtained by inverting the baseband amplitude signal corresponding to the baseband signal, the amplitude of the first electrical signal is the same as the lower envelope amplitude of the first radio frequency electrical signal. In addition, to enable the first electrical signal to be time-synchronized with the first radio frequency electrical signal, and enable the amplitude of the first electrical signal to be the same as the envelope amplitude of the first radio frequency electrical signal, any one or more of the following optional manner 1 to manner 6 may be used:

Manner 1: Amplitudes and delays of a baseband signal and a baseband amplitude signal are adjusted through digital delay. The baseband signal is for determining the first radio frequency electrical signal, and the baseband amplitude signal corresponds to the baseband signal.

Manner 2: Amplitudes and delays of an intermediate frequency signal and a baseband amplitude signal are adjusted through digital delay. The intermediate frequency signal is obtained by performing up-conversion processing on a baseband signal, the intermediate frequency signal is for determining the first radio frequency electrical signal, and the baseband amplitude signal corresponds to the baseband signal.

Manner 3: Amplitudes and delays of the first radio frequency electrical signal and a baseband amplitude signal are adjusted through digital delay. The baseband amplitude signal corresponds to a baseband signal, and the baseband signal is for determining the first radio frequency electrical signal.

Manner 4: A length of a transmission line for transmitting a baseband amplitude signal and/or a length of a transmission line for transmitting a baseband signal are/is adjusted, and amplification, attenuation, and/or delay processing are/is performed on the baseband amplitude signal and/or the baseband signal. The baseband signal is for determining the first radio frequency electrical signal, and the baseband amplitude signal corresponds to the baseband signal.

Manner 5: A length of a transmission line for transmitting a baseband amplitude signal and/or a length of a transmission line for transmitting an intermediate frequency signal are/is adjusted, and amplification, attenuation, and/or delay processing are/is performed on the baseband amplitude signal and/or the intermediate frequency signal. The intermediate frequency signal is obtained by performing up-conversion processing on a baseband signal, the intermediate frequency signal is for determining the first radio frequency electrical signal, and the baseband amplitude signal corresponds to the baseband signal.

Manner 6: A length of a transmission line for transmitting a baseband amplitude signal and/or a length of a transmission line for transmitting the first radio frequency electrical signal are/is adjusted, and amplification, attenuation, and/or delay processing are/is performed on the baseband amplitude signal and/or the first radio frequency electrical signal. The baseband amplitude signal corresponds to a baseband signal, and the baseband signal is for determining the first radio frequency electrical signal.

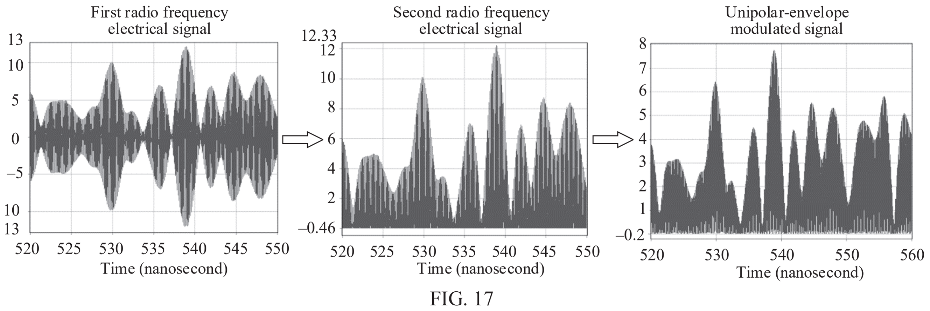

Implementation 1.2: That the first communication apparatus converts the first radio frequency electrical signal into the unipolar-envelope modulated signal may include: The first communication apparatus converts the first radio frequency electrical signal into a second radio frequency electrical signal. The first communication apparatus filters the second radio frequency electrical signal to obtain a baseband signal and a fundamental frequency signal in the second radio frequency electrical signal. The first communication apparatus adjusts spectral amplitudes of the baseband signal and the fundamental frequency signal in the second radio frequency electrical signal to obtain the unipolar-envelope modulated signal. It can be learned that the first communication apparatus may first convert the first radio frequency electrical signal as a full-wave signal into the second radio frequency electrical signal as a half-wave signal, and then convert the second radio frequency electrical signal as a half-wave signal into the unipolar-envelope modulated signal, to convert the first radio frequency electrical signal into the unipolar-envelope modulated signal, as shown in FIG. 17. In addition, this implementation may be implemented on a radio frequency link, and does not include baseband processing, so that impact of the baseband processing on the signal can be reduced.

The second radio frequency electrical signal is a positive half-amplitude signal or a negative half-amplitude signal of the first radio frequency electrical signal with respect to the direct current component, in other words, the second radio frequency electrical signal is a radio frequency electrical signal having a positive half-amplitude or a negative half-amplitude of the first radio frequency electrical signal with respect to the direct current component. A carrier wave in the second radio frequency electrical signal has half of a periodic signal in each periodicity. For example, the carrier wave in the second radio frequency electrical signal has a sine wave waveform in half of each periodicity, and the carrier wave does not exist in the other half of each periodicity, to be specific, a value of the carrier wave in the other half of each periodicity is 0, as shown in FIG. 13b.

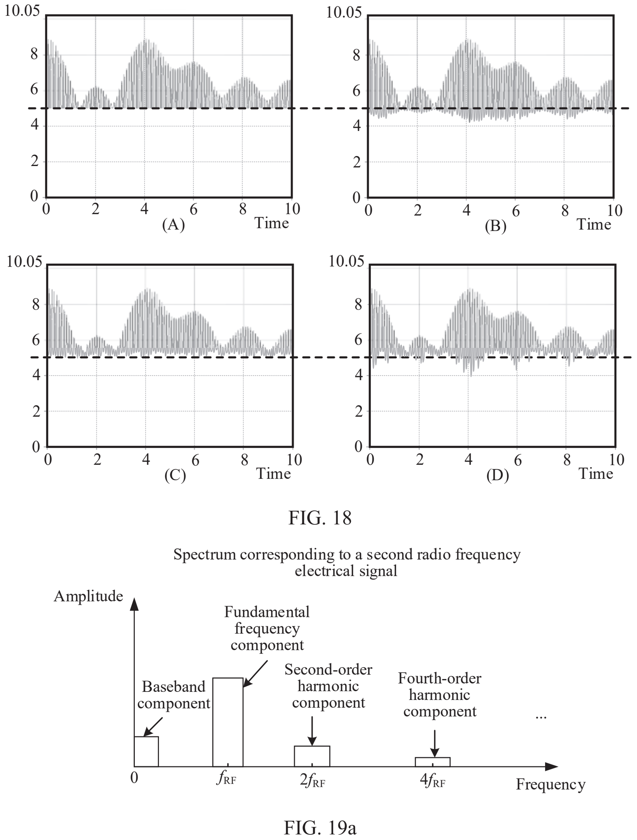

This embodiment of this application does not restrict the second radio frequency electrical signal to having an absolute positive half-amplitude or an absolute negative half-amplitude of the first radio frequency electrical signal with respect to the direct current component. It may be understood that in addition to having the entire positive half-amplitude or the entire negative half-amplitude of the first radio frequency electrical signal with respect to the direct current component, the second radio frequency electrical signal may have a large part of the positive half-amplitude or a large part of the negative half-amplitude of the first radio frequency electrical signal with respect to the direct current component, may have the entire positive half-amplitude and a small part of the negative half-amplitude of the first radio frequency electrical signal with respect to the direct current component, may have the entire negative half-amplitude and a small part of the positive half-amplitude of the first radio frequency electrical signal with respect to the direct current component, may have a large part of the positive half-amplitude and a small part of the negative half-amplitude of the first radio frequency electrical signal with respect to the direct current component, or may have a large part of the negative half-amplitude and a small part of the positive half-amplitude of the first radio frequency electrical signal with respect to the direct current component. For example, the first radio frequency electrical signal is a radio frequency electrical signal shown in FIG. 4. A possible waveform of the second radio frequency electrical signal is shown in (A) to (D) in FIG. 18. Black dashed lines in (A) to (D) in FIG. 18 represent a direct current component corresponding to the first radio frequency electrical signal shown in FIG. 4. In FIG. 18, a second radio frequency electrical signal shown in (A) has an entire positive half-amplitude of the first radio frequency electrical signal shown in FIG. 4 with respect to the direct current component, a second radio frequency electrical signal shown in (B) has an entire positive half-amplitude and a small part of a negative half-amplitude of the first radio frequency electrical signal shown in FIG. 4 with respect to the direct current component, a second radio frequency electrical signal shown in (C) has a large part of a positive half-amplitude of the first radio frequency electrical signal shown in FIG. 4 with respect to the direct current component, and a second radio frequency electrical signal shown in (D) has a large part of a positive half-amplitude and a small part of a negative half-amplitude of the first radio frequency electrical signal shown in FIG. 4 with respect to the direct current component.

In addition, in the implementation 1.2, the unipolar-envelope modulated signal includes an adjusted baseband signal and an adjusted fundamental frequency signal in the second radio frequency electrical signal, and a difference between an amplitude of a baseband component and an amplitude of a fundamental frequency component in a spectrum corresponding to the unipolar-envelope modulated signal is less than or equal to a second value. It can be learned that for the filtering the second radio frequency electrical signal, the first communication apparatus may filter out a high-order harmonic component in the second radio frequency electrical signal, and reserve the baseband signal and the fundamental frequency signal in the second radio frequency electrical signal. Compared with the second radio frequency electrical signal, the unipolar-envelope modulated signal has fewer harmonic components. In this case, a bandwidth requirement for an optical modulator when optical modulation is performed on the unipolar-envelope modulated signal is lower than a bandwidth requirement for the optical modulator when optical modulation is performed on the second radio frequency electrical signal. In addition, the second value may be predefined. This is not limited. The second value may be set to a small value. In this case, the amplitude of the baseband component and the amplitude of the fundamental frequency component in the spectrum corresponding to the unipolar-envelope modulated signal are equal or close to each other.

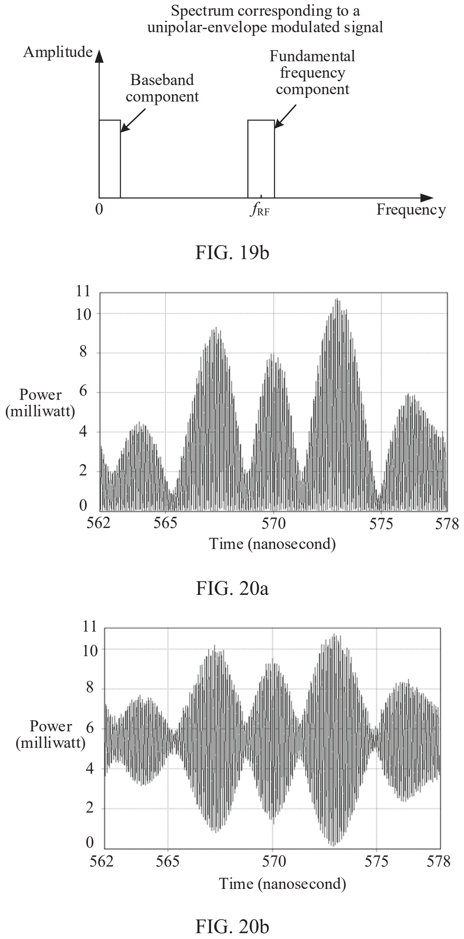

For example, with reference to FIG. 19a and FIG. 19b, FIG. 19a shows a spectrum corresponding to the second radio frequency electrical signal, and FIG. 19b shows the spectrum corresponding to the unipolar-envelope modulated signal. It can be learned that the spectrum corresponding to the second radio frequency electrical signal further includes high-order harmonic components such as a second-order harmonic component and a fourth-order harmonic component in addition to a baseband component and a fundamental frequency component; and the spectrum corresponding to the unipolar-envelope modulated signal includes the baseband component and the fundamental frequency component, but does not include a high-order harmonic component.

For another example, in the spectrum corresponding to the second radio frequency electrical signal shown in FIG. 19a, an amplitude of the baseband component is 0.318, and an amplitude of the fundamental frequency component is 0.5. The first communication apparatus may increase the spectral amplitude of the baseband signal in the second radio frequency electrical signal by $\frac{0.5}{0.318} \approx 1.57$ times, so that in the spectrum corresponding to the unipolar-envelope modulated signal shown in FIG. 19b, the amplitude of the baseband component is approximately 0.5, and the amplitude of the fundamental frequency component is 0.5.

Optionally, the operation of converting the first radio frequency electrical signal into the second radio frequency electrical signal by the first communication apparatus may be implemented by the first communication apparatus by using a low-noise power amplifier. The low-noise power amplifier may be configured to process the first radio frequency electrical signal as a full-wave signal to obtain the second radio frequency electrical signal as a half-wave signal. The low-noise power amplifier may be, for example, a low noise amplifier (low noise amplifier, LNA).

For example, the low-noise power amplifier may be a class-B low-noise power amplifier (for example, a class-B LNA), and the class-B low-noise power amplifier has a small adjacent channel leakage power ratio (adjacent channel leakage power ratio, ACLR). An amplitude midpoint of the first radio frequency electrical signal (namely, a location of the direct current component corresponding to the first radio frequency electrical signal) may be accurately cut by the second radio frequency electrical signal generated by the class-B low-noise power amplifier, to be specific, the second radio frequency electrical signal obtained by using the class-B low-noise power amplifier may have the entire positive half-amplitude or the entire negative half-amplitude of the first radio frequency electrical signal with respect to the direct current component. For another example, when an ACLR performance requirement permits, the low-noise power amplifier may alternatively be a class-AB low-noise power amplifier (for example, a class-AB LNA) or a class-C low-noise power amplifier (for example, a class-C LNA), and both an ACLR of the class-AB low-noise power amplifier and an ACLR of the class-C low-noise power amplifier are slightly higher than the ACLR of the class-B low-noise power amplifier.

In an optional implementation, the method may further include: The first communication apparatus generates the first radio frequency electrical signal. An optional manner in which the first communication apparatus generates the first radio frequency electrical signal may be described in the following optional implementation 2.1 to implementation 2.3.

Implementation 2.1: The first radio frequency electrical signal may be an analog signal obtained by performing modulation, digital-to-analog conversion, and up-conversion processing on a digital baseband signal (namely, a baseband signal in digital domain) in sequence. That the first communication apparatus generates the first radio frequency electrical signal may include: The first communication apparatus modulates the digital baseband signal, to convert the digital baseband signal into a digital baseband modulated signal. Then, the first communication apparatus performs digital-to-analog conversion on the digital baseband modulated signal, to obtain an analog baseband signal (namely, a baseband signal in analog domain). Next, the first communication apparatus performs up-conversion processing on the analog baseband signal, to obtain the first radio frequency electrical signal.

Implementation 2.2: The first radio frequency electrical signal may be an analog signal obtained by performing modulation, first time of up-conversion processing, digital-to-analog conversion, and second time of up-conversion processing on a digital baseband signal (namely, a baseband signal in digital domain) in sequence. That the first communication apparatus generates the first radio frequency electrical signal may include: The first communication apparatus modulates the digital baseband signal, to convert the digital baseband signal into a digital baseband modulated signal. The first communication apparatus performs digital up-conversion processing on the digital baseband modulated signal, to obtain a digital intermediate frequency signal. The first communication apparatus performs digital-to-analog conversion on the digital intermediate frequency signal, to obtain an intermediate frequency signal as an analog signal. Next, the first communication apparatus performs up-conversion processing on the intermediate frequency signal, to obtain the first radio frequency electrical signal.

Implementation 2.3: The first radio frequency electrical signal may be an analog signal obtained by performing modulation, up-conversion processing, and digital-to-analog conversion on a digital baseband signal (namely, a baseband signal in digital domain) in sequence. That the first communication apparatus generates the first radio frequency electrical signal may include: The first communication apparatus modulates the digital baseband signal, to convert the digital baseband signal into a digital baseband modulated signal. The first communication apparatus performs up-conversion processing on the digital baseband modulated signal, to obtain a digital radio frequency signal. Next, the first communication apparatus performs up-conversion processing on the digital radio frequency signal, to obtain the first radio frequency electrical signal.

In addition, optionally, when the first communication apparatus converts the first radio frequency electrical signal into the unipolar-envelope modulated signal in the implementation 1.1, in any one of the foregoing implementation 2.1 to implementation 2.3, the method may further include: The first communication apparatus generates the first electrical signal. The first communication apparatus may determine a digital envelope signal of the digital baseband modulated signal as the first electrical signal.

In another optional implementation, the method may further include: The first communication apparatus receives the first radio frequency electrical signal. For example, the first radio frequency electrical signal may be generated by an apparatus other than the first communication apparatus and the second communication apparatus and then sent to the first communication apparatus, or may be received by the first communication apparatus through an antenna.

When the first radio frequency electrical signal is generated by the apparatus other than the first communication apparatus and the second communication apparatus and then sent to the first communication apparatus, the first communication apparatus may convert the first radio frequency electrical signal into the unipolar-envelope modulated signal in the foregoing implementation 1.1 or implementation 1.2. If the first communication apparatus converts the first radio frequency electrical signal into the unipolar-envelope modulated signal in the foregoing implementation 1.1, the communication apparatus that generates and sends the first radio frequency electrical signal further needs to generate the first electrical signal and send the first electrical signal to the first communication apparatus. In addition, an optional manner in which the apparatus other than the first communication apparatus and the second communication apparatus generates the first radio frequency electrical signal may be similar to any one or more of the foregoing implementation 2.1 to implementation 2.3, and details are not described herein again.

When the first radio frequency electrical signal is received by the first communication apparatus through the antenna, the first communication apparatus may convert the first radio frequency electrical signal into the unipolar-envelope modulated signal in the foregoing implementation 1.2. The manner in which the first communication apparatus receives the first radio frequency electrical signal through the antenna may be applied to a scenario in which the first communication apparatus is an RRH or is deployed in an RRH and the second communication apparatus is a BBU or is deployed in a BBU.

S102: The first communication apparatus sends a first radio frequency optical signal. Correspondingly, the second communication apparatus receives the first radio frequency optical signal.

The first radio frequency optical signal is a unipolar-envelope radio frequency optical signal that is obtained by performing optical modulation on the unipolar-envelope modulated signal and whose lower envelope is flat and lower envelope amplitude is less than or equal to a first value. The first value may be predefined, and the first value may be set to a small value, to be specific, the lower envelope amplitude of the first radio frequency optical signal is equal to or close to 0. In addition, a carrier wave in the first radio frequency optical signal is a sine wave. To be specific, a radio frequency carrier wave in the first radio frequency optical signal has a complete sine wave waveform in each periodicity.

Compared with an optical signal that is obtained by performing optical modulation on the first radio frequency electrical signal and whose upper envelope and lower envelope are symmetric with respect to a direct current component, the first radio frequency optical signal has a lower average optical power, so that transmit optical power between the first communication apparatus and the second communication apparatus can be reduced, to help reduce power consumption of an optical component. In addition, in a scenario in which the optical signal is transmitted between the first communication apparatus and the second communication apparatus through a fiber, the reduction of the transmit optical power further helps reduce a nonlinear effect in fiber optics transmission, to reduce signal distortion caused by the nonlinear effect in the fiber optics transmission. For example, the first radio frequency optical signal obtained based on the unipolar-envelope modulated signal is shown in FIG. 20a, the optical signal obtained by performing optical modulation on the first radio frequency electrical signal is shown in FIG. 20b, and a waveform of a carrier wave in the first radio frequency optical signal shown in FIG. 20a is shown in FIG. 13a. It can be learned that a lower envelope of the first radio frequency optical signal shown in FIG. 20a is flat, and a lower envelope amplitude is close to 0 (to be specific, a power value corresponding to the lower envelope is close to 0); and an average optical power of the first radio frequency optical signal shown in FIG. 20a is lower than an average optical power of the optical signal shown in FIG. 20b.

In an optional implementation, the method may further include: The first communication apparatus performs optical modulation on the unipolar-envelope modulated signal to obtain the first radio frequency optical signal. Optionally, that the first communication apparatus performs optical modulation on the unipolar-envelope modulated signal to obtain the first radio frequency optical signal may include: The first communication apparatus superimposes a first bias electrical signal onto the unipolar-envelope modulated signal. The first communication apparatus performs optical modulation on the unipolar-envelope modulated signal superimposed with the first bias electrical signal, to obtain the first radio frequency optical signal. Optionally, the operation of superimposing the first bias electrical signal onto the unipolar-envelope modulated signal by the first communication apparatus and the operation of performing, by the first communication apparatus, optical modulation on the unipolar-envelope modulated signal superimposed with the first bias electrical signal may be implemented by the first communication apparatus by using an optical modulator. A unipolar-envelope modulated signal whose lower envelope is flat and upper envelope corresponds to the upper envelope of the first radio frequency electrical signal or a unipolar-envelope modulated signal whose upper envelope is flat and lower envelope corresponds to the lower envelope of the first radio frequency electrical signal may be selected based on a driving requirement of the optical modulator for optical modulation.

In addition, the optical modulator may be, for example, a directly modulated laser, an electro-absorption modulator, or a Mach-Zehnder modulator. The directly modulated laser is a laser that implements optical modulation by changing a current. For example, the directly modulated laser may be a DML. The electro-absorption modulator and the Mach-Zehnder modulator are lasers that implement optical modulation by changing a voltage. For example, the electro-absorption modulator may be an EAM, and the Mach-Zehnder modulator may be an MZM. The following separately describes a case in which the optical modulator is the directly modulated laser and a case in which the optical modulator is the electro-absorption modulator or the Mach-Zehnder modulator, as described in the following optional implementation 3.1 and implementation 3.2.

Implementation 3.1: The optical modulator is the directly modulated laser. In this case, the first bias electrical signal is a first bias current signal, a current corresponding to the first bias current signal is greater than or equal to a threshold current of the directly modulated laser, and the current corresponding to the first bias current signal is less than a first current. A lower envelope of a unipolar-envelope modulated signal used by the directly modulated laser for optical modulation is flat, and an upper envelope of the unipolar-envelope modulated signal corresponds to the upper envelope of the first radio frequency electrical signal. When the direct current component of the first radio frequency electrical signal is 0, the directly modulated laser may perform optical modulation by using a positive-direction unipolar-envelope modulated signal.

It may be understood that the first bias current signal is applied to the directly modulated laser, so that a bias current of the directly modulated laser is the current corresponding to the first bias current signal. That the directly modulated laser performs optical modulation on the unipolar-envelope modulated signal superimposed with the first bias current signal means: The directly modulated laser whose bias current is the current corresponding to the first bias current signal performs optical modulation on the unipolar-envelope modulated signal. In this optical modulation process, an operating current of the directly modulated laser is set based on the unipolar-envelope modulated signal superimposed with the first bias current signal. The current corresponding to the first bias current signal is less than the first current, so that the average optical power of the first radio frequency optical signal is lower than an optical power obtained by the directly modulated laser by performing optical modulation when the operating current is the first current.

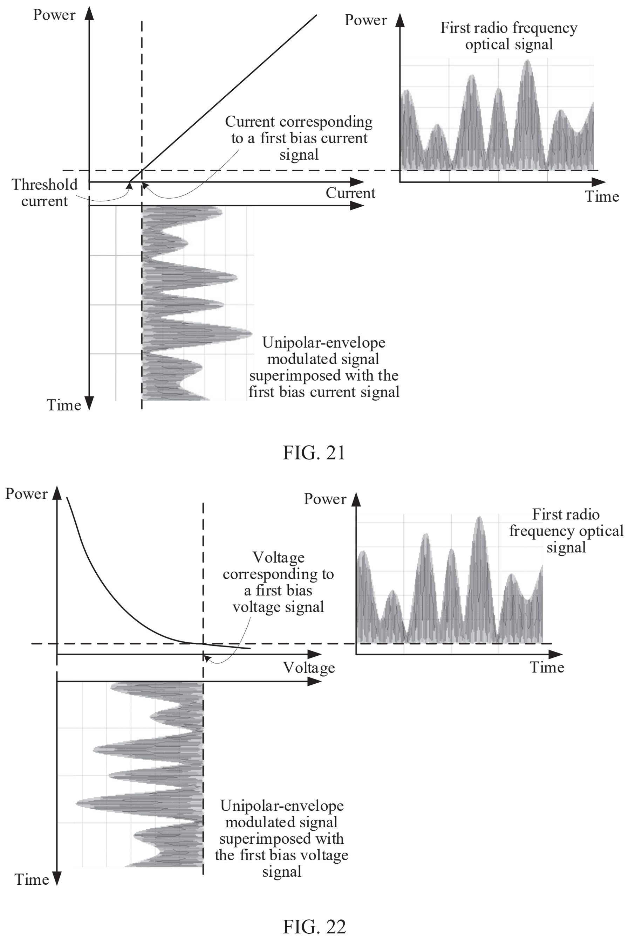

For example, the direct current component corresponding to the first radio frequency electrical signal is 0. With reference to FIG. 21, in FIG. 21, a power-current curve represents a relationship between an operating current of the directly modulated laser and an optical power, a current-time curve represents the unipolar-envelope modulated signal superimposed with the first bias current signal, and a power-time curve represents the first radio frequency optical signal. It can be learned that, when the operating current of the directly modulated laser is less than or equal to the threshold current, an optical power obtained by the directly modulated laser by performing optical modulation is 0. When the operating current of the directly modulated laser is greater than the threshold current, a larger operating current of the directly modulated laser indicates a higher optical power obtained by the directly modulated laser by performing optical modulation. Based on this feature of the directly modulated laser, the first bias current signal corresponding to a current greater than or equal to the threshold current of the directly modulated laser and less than the first current is superimposed onto the unipolar-envelope modulated signal, so that the operating current of the directly modulated laser is set based on an electrical signal obtained by superimposing the first bias current signal onto the unipolar-envelope modulated signal, and the directly modulated laser may obtain the first radio frequency optical signal through optical modulation.

The first current may be predefined, or may be determined based on a predefined optical power (the first current may be an operating current needed by the directly modulated laser to perform optical modulation to obtain the predefined optical power). For example, the first current may be less than a bias current needed when the directly modulated laser performs optical modulation on the first radio frequency electrical signal to obtain an optical signal having a complete waveform of the first radio frequency electrical signal. In addition, the current corresponding to the first bias current signal may be set at a low-output optical power point (for example, at the threshold current or near the threshold current), to help obtain the first radio frequency optical signal with a lower average optical power, so that the power consumption of the optical component is more effectively reduced, and the nonlinear effect in the fiber optics transmission is more effectively reduced in the scenario in which the optical signal is transmitted between the first communication apparatus and the second communication apparatus through the fiber.

Implementation 3.2: The optical modulator is the electro-absorption modulator or the Mach-Zehnder modulator. In this case, the first bias electrical signal is a first bias voltage signal, and a voltage corresponding to the first bias voltage signal is greater than a first voltage. An upper envelope of a unipolar-envelope modulated signal used by the electro-absorption modulator or the Mach-Zehnder modulator for optical modulation is flat, and a lower envelope of the unipolar-envelope modulated signal corresponds to the lower envelope of the first radio frequency electrical signal. When the direct current component of the first radio frequency electrical signal is 0, the electro-absorption modulator or the Mach-Zehnder modulator may perform optical modulation by using a negative-direction unipolar-envelope modulated signal.

In addition, in a scenario in which the optical modulator is the electro-absorption modulator or the Mach-Zehnder modulator, a light source may be generated by additionally using a laser diode, and the electro-absorption modulator or the Mach-Zehnder modulator implements the optical modulation based on the light source generated by the laser diode. It can be learned that the generation of the light source and the optical modulation are implemented by different components. This helps reduce impact of a bandwidth of the light source on high-frequency modulation when the voltage corresponding to the first bias voltage signal is low.

The following provides specific descriptions by using an example in which the optical modulator is the electro-absorption modulator. A case in which the optical modulator is the Mach-Zehnder modulator is similar to the case in which the optical modulator is the electro-absorption modulator, reference may be made to the related descriptions of the case in which the optical modulator is the electro-absorption modulator, and details are not described again.

It may be understood that the first bias voltage signal is applied to the electro-absorption modulator, so that a bias voltage of the electro-absorption modulator is the voltage corresponding to the first bias voltage signal. That the electro-absorption modulator performs optical modulation on the unipolar-envelope modulated signal superimposed with the first bias voltage signal means: The electro-absorption modulator whose bias voltage is the voltage corresponding to the first bias voltage signal performs optical modulation on the unipolar-envelope modulated signal. In this optical modulation process, an operating voltage of the electro-absorption modulator is set based on the unipolar-envelope modulated signal superimposed with the first bias voltage signal.

For example, the direct current component corresponding to the first radio frequency electrical signal is 0. With reference to FIG. 22, in FIG. 22, a power-voltage curve represents a relationship between an operating voltage of the electro-absorption modulator and an optical power, a voltage-time curve represents the unipolar-envelope modulated signal superimposed with the first bias voltage signal, and a power-time curve represents the first radio frequency optical signal. It can be learned that a smaller operating voltage of the electro-absorption modulator indicates a higher optical power obtained by the electro-absorption modulator by performing optical modulation, and a larger operating voltage of the electro-absorption modulator indicates a lower optical power obtained by the electro-absorption modulator by performing optical modulation. Based on this feature of the electro-absorption modulator, the first bias voltage signal corresponding to a voltage greater than the first voltage is superimposed onto the unipolar-envelope modulated signal, so that the operating voltage of the electro-absorption modulator is set based on the unipolar-envelope modulated signal superimposed with the first bias voltage signal, and the electro-absorption modulator may obtain the first radio frequency optical signal through optical modulation.

The first voltage may be predefined, or may be determined based on a predefined optical power (the first voltage may be an operating voltage needed by the electro-absorption modulator to perform optical modulation to obtain the predefined optical power). For example, the first voltage is greater than an intermediate voltage in a linear region in the power-voltage curve. In addition, the voltage corresponding to the first bias voltage signal may be set at a low-output optical power point (for example, at a high voltage), to help obtain the first radio frequency optical signal with a lower average optical power, so that the power consumption of the optical component is more effectively reduced, and the nonlinear effect in the fiber optics transmission is more effectively reduced in the scenario in which the optical signal is transmitted between the first communication apparatus and the second communication apparatus through the fiber.

S103: The second communication apparatus converts the first radio frequency optical signal into the first radio frequency electrical signal.

In an optional implementation, the first radio frequency electrical signal that is converted by the second communication apparatus from the first radio frequency optical signal is a fundamental frequency signal in the unipolar-envelope modulated signal obtained by the second communication apparatus by performing optical-to-electrical conversion on the first radio frequency optical signal. A center frequency of the fundamental frequency signal is the same as a carrier frequency of the first radio frequency electrical signal used by the first communication apparatus to obtain the unipolar-envelope modulated signal. Optionally, the carrier frequency of the first radio frequency electrical signal used by the first communication apparatus to obtain the unipolar-envelope modulated signal may be sent by the first communication apparatus to the second communication apparatus.

In an optional manner, that the second communication apparatus converts the first radio frequency optical signal into the first radio frequency electrical signal may include: The second communication apparatus performs optical-to-electrical conversion on the first radio frequency optical signal by using a photoelectric detector, to obtain the unipolar-envelope modulated signal, where a passband of the photoelectric detector covers a spectrum of the fundamental frequency signal in the unipolar-envelope modulated signal. The second communication apparatus filters the unipolar-envelope modulated signal by using a band-pass filter, to obtain the first radio frequency electrical signal, where a passband of the band-pass filter includes only the spectrum of the fundamental frequency signal in the unipolar-envelope modulated signal. The photoelectric detector may be, for example, a PD.

It can be learned that the second communication apparatus may convert the first radio frequency optical signal into the first radio frequency electrical signal by using the photoelectric detector and the band-pass filter, without performing complex algorithm processing. This simplifies a manner of recovering the first radio frequency electrical signal. In addition, that the passband of the band-pass filter includes only the spectrum of the fundamental frequency signal in the unipolar-envelope modulated signal indicates that the passband of the band-pass filter includes only a radio frequency spectrum of the fundamental frequency signal in the unipolar-envelope modulated signal. The following case in which a passband of a photoelectric detector includes only the spectrum of the fundamental frequency signal in the unipolar-envelope modulated signal is similar to the case herein, and details are not described below again.

In another optional manner, that the second communication apparatus converts the first radio frequency optical signal into the first radio frequency electrical signal may include: The second communication apparatus performs optical-to-electrical conversion on the first radio frequency optical signal by using a photoelectric detector to obtain the unipolar-envelope modulated signal, and determines the first radio frequency electrical signal from the unipolar-envelope modulated signal, where a passband of the photoelectric detector includes only a spectrum of the fundamental frequency signal. The photoelectric detector may be, for example, a PD. It can be learned that, in addition to having an optical-to-electrical conversion function, the photoelectric detector can further extract the fundamental frequency signal in the unipolar-envelope modulated signal, to obtain the first radio frequency electrical signal. The second communication apparatus may directly convert the first radio frequency optical signal into the first radio frequency electrical signal by using the photoelectric detector, without performing complex algorithm processing. This simplifies a manner of recovering the first radio frequency electrical signal.

In conclusion, in the signal transmission method, the first communication apparatus converts the first radio frequency electrical signal into the unipolar-envelope modulated signal, where the upper envelope and the lower envelope of the first radio frequency electrical signal are symmetric with respect to the direct current component, and the carrier wave in the unipolar-envelope modulated signal is a sine wave. The first communication apparatus sends the first radio frequency optical signal, where the first radio frequency optical signal is a unipolar-envelope radio frequency optical signal that is obtained by performing optical modulation on the unipolar-envelope modulated signal and whose lower envelope is flat and lower envelope amplitude is less than or equal to the first value. The second communication apparatus converts the first radio frequency optical signal into the first radio frequency electrical signal. The unipolar-envelope modulated signal is a radio frequency electrical signal with a flat lower envelope, and the upper envelope of the unipolar-envelope modulated signal corresponds to the upper envelope of the first radio frequency electrical signal; or the unipolar-envelope modulated signal is a radio frequency electrical signal with a flat upper envelope, and the lower envelope of the unipolar-envelope modulated signal corresponds to the lower envelope of the first radio frequency electrical signal.

It can be learned that, compared with the optical signal that is obtained by performing optical modulation on the first radio frequency electrical signal and whose upper envelope and lower envelope are symmetric, the first radio frequency optical signal obtained based on the unipolar-envelope modulated signal has a lower average optical power, so that the transmit optical power between the first communication apparatus and the second communication apparatus can be reduced, to help reduce the power consumption of the optical component and improve power conversion efficiency.

For example, in a scenario in which the optical signal is transmitted between the second communication apparatus and the first communication apparatus through the fiber and a fiber optics transmission link between the first communication apparatus and the second communication apparatus includes an optical parametric amplifier, the reduction of the transmit optical power between the second communication apparatus and the first communication apparatus helps reduce power consumption of the optical parametric amplifier, and further helps reduce signal distortion caused because the optical parametric amplifier is easy to enter a gain saturation region. For another example, in a scenario in which the second communication apparatus performs optical-to-electrical conversion on the first radio frequency optical signal by using the photoelectric detector, the reduction of the transmit optical power between the second communication apparatus and the first communication apparatus helps reduce a direct current of the photoelectric detector, to reduce power consumption of the photoelectric detector and improve power conversion efficiency of the photoelectric detector.

In the scenario in which the optical signal is transmitted between the second communication apparatus and the first communication apparatus through the fiber, the reduction of the transmit optical power further helps reduce the nonlinear effect in the fiber optics transmission, to reduce the signal distortion caused by the nonlinear effect in the fiber optics transmission. In a scenario in which the second communication apparatus further needs to output the first radio frequency electrical signal to an antenna for signal radiation, the first radio frequency optical signal with a lower average optical power further helps enable a transmit optical power in a fiber to be lower than a power threshold for generating a nonlinear effect in fiber optics transmission. In this case, a range between the average optical power of the first radio frequency optical signal and the power threshold may be used as amplification space of the transmit optical power. This helps obtain an optical signal with a larger optical modulation amplitude while reducing the nonlinear effect in the fiber optics transmission, to help improve a radio frequency radiation power of the antenna and signal quality.

In addition, the second communication apparatus further recovers the first radio frequency electrical signal with a high power from the first radio frequency optical signal with a low average optical power. In the scenario in which the second communication apparatus needs to output the first radio frequency electrical signal to the antenna for signal radiation, the signal transmission method can achieve a high radio frequency radiation power of the antenna by using a low transmit optical power.

It may be understood that, to implement functions in the foregoing method, the first communication apparatus or the second communication apparatus includes a corresponding hardware structure and/or software module for performing each function. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

With reference to the accompanying drawings, the following describes possible structures of the first communication apparatus and the second communication apparatus provided in embodiments of this application.

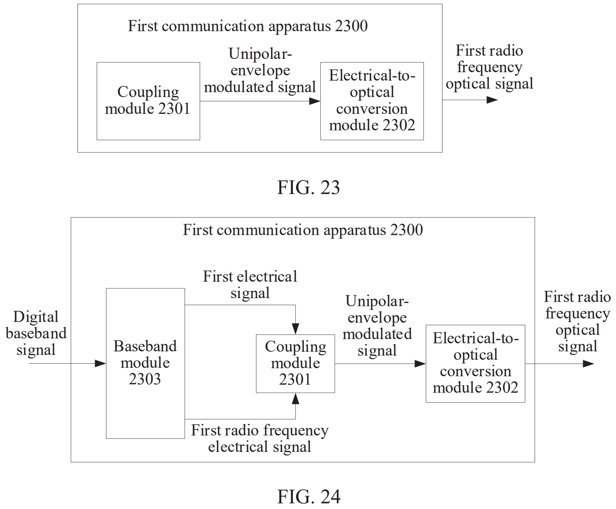

FIG. 23 is a diagram of a structure of a first communication apparatus 2300 according to an embodiment of this application. The first communication apparatus 2300 includes a coupling module 2301 and an electrical-to-optical conversion module 2302.

The coupling module 2301 is configured to: superimpose a first electrical signal onto a first radio frequency electrical signal to obtain a unipolar-envelope modulated signal, and output the unipolar-envelope modulated signal to the electrical-to-optical conversion module 2302. The electrical-to-optical conversion module 2302 is configured to perform optical modulation on the unipolar-envelope modulated signal to obtain a first radio frequency optical signal. The electrical-to-optical conversion module 2302 may be further configured to send the first radio frequency optical signal.

The first radio frequency electrical signal is determined based on a baseband signal, and an upper envelope and a lower envelope of the first radio frequency electrical signal are symmetric with respect to a direct current component. The first electrical signal is a baseband amplitude signal corresponding to the baseband signal, or the first electrical signal is an electrical signal obtained by inverting a baseband amplitude signal corresponding to the baseband signal. The first radio frequency optical signal is a unipolar-envelope radio frequency optical signal whose lower envelope is flat and lower envelope amplitude is less than or equal to a first value.

A carrier wave in the unipolar-envelope modulated signal is a sine wave. The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

In an optional implementation, the electrical-to-optical conversion module 2302 may be an optical modulator. For the performing optical modulation on the unipolar-envelope modulated signal to obtain the first radio frequency optical signal, the optical modulator may be specifically configured to: superimpose a first bias electrical signal onto the unipolar-envelope modulated signal, and perform optical modulation on the unipolar-envelope modulated signal superimposed with the first bias electrical signal, to obtain the first radio frequency optical signal.

Optionally, the optical modulator may be a directly modulated laser. In this case, the first bias electrical signal is a first bias current signal, a current corresponding to the first bias current signal is greater than or equal to a threshold current of the directly modulated laser, and the current corresponding to the first bias current signal is less than a first current.

Optionally, the optical modulator may be an electro-absorption modulator or a Mach-Zehnder modulator. In this case, the first bias electrical signal is a first bias voltage signal, and a voltage corresponding to the first bias voltage signal is greater than a first voltage.

In an optional implementation, the first communication apparatus 2300 may further include a baseband module 2303, as shown in FIG. 24. The baseband module 2303 may be configured to: generate the first electrical signal, and output the first electrical signal to the coupling module 2301. The baseband module 2303 may be further configured to: generate the first radio frequency electrical signal, and output the first radio frequency electrical signal to the coupling module 2301.

Optionally, for the generating the first electrical signal and the first radio frequency electrical signal, the baseband module 2303 may be specifically configured to: modulate a digital baseband signal (namely, a baseband signal in digital domain) that is input to the baseband module 2303, to convert the digital baseband signal into a digital baseband modulated signal; perform digital-to-analog conversion on a digital envelope signal of the digital baseband modulated signal, to obtain the first electrical signal as an analog signal; perform up-conversion processing on the digital baseband modulated signal, to obtain a digital radio frequency signal; and perform digital-to-analog conversion on the digital radio frequency signal to obtain the first radio frequency electrical signal as an analog signal. In this embodiment of this application, a digital-to-analog converter (digital-to-analog converter, DAC) may be used to implement the digital-to-analog conversion. Details are not described below again.

In addition, this embodiment of this application imposes no limitation on a sequence between the operation of performing, by the baseband module 2303, digital-to-analog conversion on the digital envelope signal of the digital baseband modulated signal to obtain the first electrical signal as an analog signal and the operation of performing, by the baseband module 2303, up-conversion processing on the digital baseband modulated signal to obtain the digital radio frequency signal and then performing digital-to-analog conversion on the digital radio frequency signal to obtain the first radio frequency electrical signal as an analog signal.

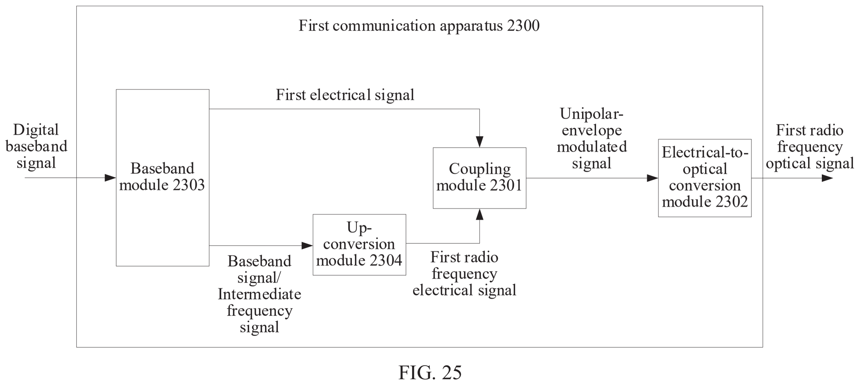

In another optional implementation, the first communication apparatus 2300 may further include a baseband module 2303 and an up-conversion module 2304, as shown in FIG. 25. The baseband module 2303 may be configured to: generate the first electrical signal, and output the first electrical signal to the coupling module 2301. The baseband module 2303 may be further configured to: generate a baseband signal (the baseband signal is a baseband signal in analog domain) or an intermediate frequency signal (the intermediate frequency signal is an analog signal) corresponding to the baseband signal, and output the baseband signal or the intermediate frequency signal to the up-conversion module 2304. The up-conversion module 2304 may be configured to: perform up-conversion processing on the baseband signal or the intermediate frequency signal to obtain the first radio frequency electrical signal, and output the first radio frequency electrical signal to the coupling module 2301.

Optionally, for the generating the first electrical signal and the baseband signal, the baseband module 2303 may be specifically configured to: modulate a digital baseband signal (namely, a baseband signal in digital domain) that is input to the baseband module 2303, to convert the digital baseband signal into a digital baseband modulated signal; perform digital-to-analog conversion on a digital envelope signal of the digital baseband modulated signal, to obtain the first electrical signal as an analog signal; and perform digital-to-analog conversion on the digital baseband modulated signal, to obtain an analog baseband signal (namely, the baseband signal in analog domain). In addition, this embodiment of this application imposes no limitation on a sequence between the operation of performing, by the baseband module 2303, digital-to-analog conversion on the digital envelope signal of the digital baseband modulated signal to obtain the first electrical signal as an analog signal and the operation of performing, by the baseband module 2303, digital-to-analog conversion on the digital baseband modulated signal to obtain the analog baseband signal.

Optionally, for the generating the first electrical signal and the intermediate frequency signal corresponding to the baseband signal, the baseband module 2303 may be specifically configured to: modulate a digital baseband signal (namely, a baseband signal in digital domain) that is input to the baseband module 2303, to convert the digital baseband signal into a digital baseband modulated signal; perform digital-to-analog conversion on a digital envelope signal of the digital baseband modulated signal, to obtain the first electrical signal as an analog signal; perform up-conversion processing on the digital baseband modulated signal to obtain a digital intermediate frequency signal; and perform digital-to-analog conversion on the digital intermediate frequency signal to obtain the intermediate frequency signal as an analog signal. This embodiment of this application imposes no limitation on a sequence between the operation of performing, by the baseband module 2303, digital-to-analog conversion on the digital envelope signal of the digital baseband modulated signal to obtain the first electrical signal as an analog signal and the operation of performing, by the baseband module 2303, up-conversion processing on the digital baseband modulated signal to obtain the digital intermediate frequency signal and then performing digital-to-analog conversion on the digital intermediate frequency signal to obtain the intermediate frequency signal as an analog signal.

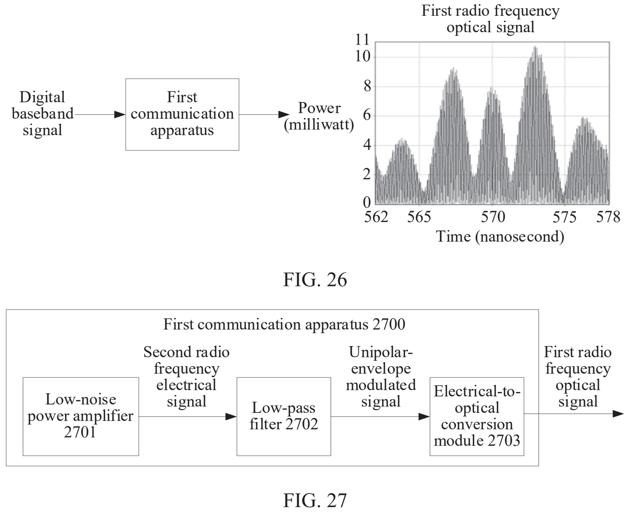

It can be learned that the first communication apparatuses 2300 shown in FIG. 24 and FIG. 25 can both obtain the first radio frequency optical signal based on the digital baseband signal that is input to the first communication apparatus, and output the first radio frequency optical signal, as shown in FIG. 26.

In an optional implementation, in the first communication apparatus 2300 shown in FIG. 24 or FIG. 25, the baseband module 2303 may be further configured to adjust an amplitude and a delay of the generated first electrical signal and/or adjust an amplitude and a delay of the generated first radio frequency electrical signal/baseband signal/intermediate frequency signal through digital delay, so that the first electrical signal is time-synchronized with the first radio frequency electrical signal, and the amplitude of the first electrical signal is the same as the envelope amplitude of the first radio frequency electrical signal.

In an optional implementation, on a transmission branch for transmitting the first electrical signal and a transmission branch for transmitting the first radio frequency electrical signal/baseband signal/intermediate frequency signal in the first communication apparatus 2300, a length of a transmission line may be adjusted, and/or an amplification component, an attenuation component, and/or a delay component may be added, to ensure that the first electrical signal is time-synchronized with the first radio frequency electrical signal, and an amplitude of the first electrical signal is the same as an envelope amplitude of the first radio frequency electrical signal. The amplification component may be configured to amplify a signal, the attenuation component may be configured to attenuate a signal, and the delay component may be configured to delay a signal.

For specific descriptions of the modules/components in FIG. 23 to FIG. 25, refer to the foregoing related descriptions. Details are not described again. In addition, for specific descriptions of the foregoing implementations, refer to related descriptions in the foregoing signal transmission method. The first communication apparatuses 2300 shown in FIG. 23 to FIG. 25 may be further configured to implement functions of the first communication apparatus in the foregoing signal transmission method, and also have corresponding beneficial effects. Details are not described herein again.

FIG. 27 is a diagram of a structure of a first communication apparatus 2700 according to an embodiment of this application. The first communication apparatus 2700 includes a low-noise power amplifier 2701, a low-pass filter 2702, and an electrical-to-optical conversion module 2703.

The low-noise power amplifier 2701 is configured to: convert a first radio frequency electrical signal into a second radio frequency electrical signal, and output the second radio frequency electrical signal to the low-pass filter 2702. The low-pass filter 2702 is configured to filter the second radio frequency electrical signal to obtain a baseband signal and a fundamental frequency signal in the second radio frequency electrical signal. The low-pass filter 2702 is further configured to: adjust spectral amplitudes of the baseband signal and the fundamental frequency signal in the second radio frequency electrical signal to obtain a unipolar-envelope modulated signal, and output the unipolar-envelope modulated signal to the electrical-to-optical conversion module 2703. The electrical-to-optical conversion module 2703 is configured to perform optical modulation on the unipolar-envelope modulated signal to obtain a first radio frequency optical signal. The electrical-to-optical conversion module 2703 may be further configured to send the first radio frequency optical signal.

An upper envelope and a lower envelope of the first radio frequency electrical signal are symmetric with respect to a direct current component. The second radio frequency electrical signal is a positive half-amplitude signal or a negative half-amplitude signal of the first radio frequency electrical signal with respect to the direct current component. The first radio frequency optical signal is a unipolar-envelope radio frequency optical signal whose lower envelope is flat and lower envelope amplitude is less than or equal to a first value.

A carrier wave in the unipolar-envelope modulated signal is a sine wave. The unipolar-envelope modulated signal includes an adjusted baseband signal and an adjusted fundamental frequency signal, and a difference between an amplitude of a baseband component and an amplitude of a fundamental frequency component in a spectrum corresponding to the unipolar-envelope modulated signal is less than or equal to a second value. The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

In an optional implementation, the low-noise power amplifier 2701 may be a class-B low-noise power amplifier (for example, a class-B LNA), a class-AB low-noise power amplifier (for example, a class-AB LNA), or a class-C low-noise power amplifier (for example, a class-C LNA).

In an optional implementation, the electrical-to-optical conversion module 2703 may be an optical modulator. For the performing optical modulation on the unipolar-envelope modulated signal to obtain the first radio frequency optical signal, the optical modulator may be specifically configured to: superimpose a first bias electrical signal onto the unipolar-envelope modulated signal, and perform optical modulation on the unipolar-envelope modulated signal superimposed with the first bias electrical signal, to obtain the first radio frequency optical signal.

Optionally, the optical modulator may be a directly modulated laser. In this case, the first bias electrical signal is a first bias current signal, a current corresponding to the first bias current signal is greater than or equal to a threshold current of the directly modulated laser, and the current corresponding to the first bias current signal is less than a first current.

Optionally, the optical modulator may be an electro-absorption modulator or a Mach-Zehnder modulator. In this case, the first bias electrical signal is a first bias voltage signal, and a voltage corresponding to the first bias voltage signal is greater than a first voltage.

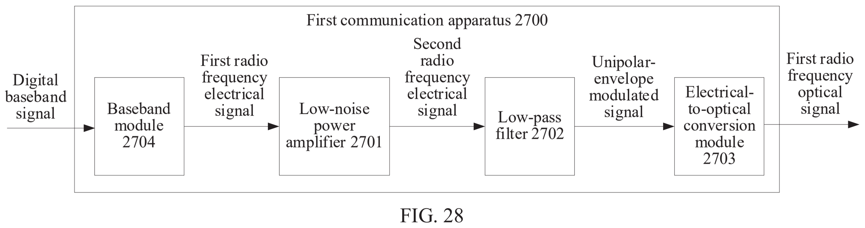

In an optional implementation, the first communication apparatus 2700 may further include a baseband module 2704, as shown in FIG. 28. The baseband module 2704 may be configured to: generate the first radio frequency electrical signal, and output the first radio frequency electrical signal to the low-noise power amplifier 2701. Optionally, for the first radio frequency electrical signal, the baseband module 2704 may be specifically configured to: modulate a digital baseband signal (namely, a baseband signal in digital domain) that is input to the baseband module 2704, to convert the digital baseband signal into a digital baseband modulated signal; perform up-conversion processing on the digital baseband modulated signal to obtain a digital radio frequency signal; and perform digital-to-analog conversion on the digital radio frequency signal to obtain the first radio frequency electrical signal as an analog signal.

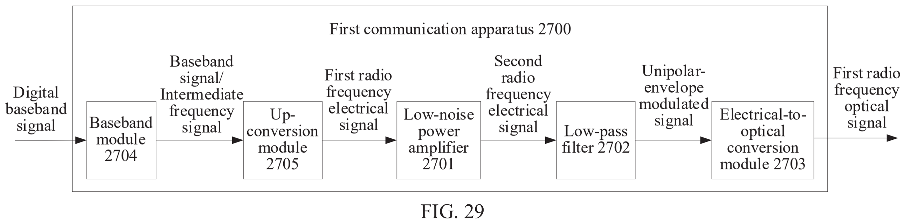

In another optional implementation, the first communication apparatus 2700 may further include a baseband module 2704 and an up-conversion module 2705, as shown in FIG. 29. The baseband module 2704 may be configured to: generate a baseband signal (the baseband signal is a baseband signal in analog domain) or an intermediate frequency signal (the intermediate frequency signal is an analog signal) corresponding to the baseband signal, and output the baseband signal or the intermediate frequency signal to the up-conversion module 2705. The up-conversion module 2705 may be configured to: perform up-conversion processing on the baseband signal or the intermediate frequency signal to obtain the first radio frequency electrical signal, and output the first radio frequency electrical signal to the low-noise power amplifier 2701.

Optionally, for the generating the baseband signal, the baseband module 2704 may be specifically configured to: modulate a digital baseband signal (namely, a baseband signal in digital domain) that is input to the baseband module 2704, to convert the digital baseband signal into a digital baseband modulated signal; and perform digital-to-analog conversion on the digital baseband modulated signal, to obtain an analog baseband signal (namely, a baseband signal in analog domain).

Optionally, for the generating the intermediate frequency signal corresponding to the baseband signal, the baseband module 2704 may be specifically configured to: modulate a digital baseband signal (namely, a baseband signal in digital domain) that is input to the baseband module 2704, to convert the digital baseband signal into a digital baseband modulated signal; perform up-conversion processing on the digital baseband modulated signal to obtain a digital intermediate frequency signal; and perform digital-to-analog conversion on the digital intermediate frequency signal to obtain an intermediate frequency signal as an analog signal.

It can be learned that the first communication apparatuses 2700 shown in FIG. 28 and FIG. 29 can both obtain the first radio frequency optical signal based on the digital baseband signal that is input to the first communication apparatus, and output the first radio frequency optical signal, as shown in FIG. 26.

In still another optional implementation, the first communication apparatus 2300 may further include an antenna, and the antenna is configured to receive the first radio frequency electrical signal. This implementation may be applied to a scenario in which the first communication apparatus is an RRH or is deployed in an RRH and the second communication apparatus is a BBU or is deployed in a BBU.

For specific descriptions of the modules/components in FIG. 27 to FIG. 29, refer to the foregoing related descriptions. Details are not described again. In addition, for specific descriptions of the foregoing implementations, refer to related descriptions in the foregoing signal transmission method. The first communication apparatuses 2700 shown in FIG. 27 to FIG. 29 may be further configured to implement functions of the first communication apparatus in the foregoing signal transmission method, and also have corresponding beneficial effects. Details are not described herein again.

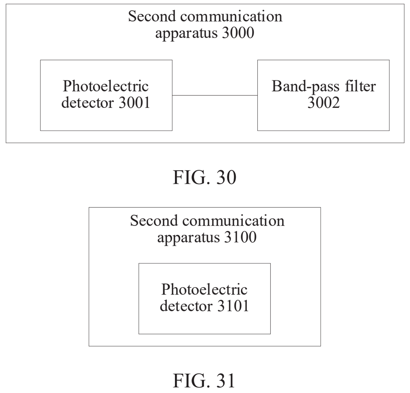

FIG. 30 is a diagram of a structure of a second communication apparatus 3000 according to an embodiment of this application. The second communication apparatus 3000 includes a photoelectric detector 3001 and a band-pass filter 3002.

The photoelectric detector 3001 is configured to receive a first radio frequency optical signal. The photoelectric detector 3001 is further configured to: perform optical-to-electrical conversion on the first radio frequency optical signal to obtain a unipolar-envelope modulated signal, and output the unipolar-envelope modulated signal to the band-pass filter 3002. A passband of the photoelectric detector 3001 covers a spectrum of a fundamental frequency signal in the unipolar-envelope modulated signal. The band-pass filter 3002 is configured to filter the unipolar-envelope modulated signal to obtain a first radio frequency electrical signal. A passband of the band-pass filter 3002 includes only the spectrum of the fundamental frequency signal in the unipolar-envelope modulated signal.

FIG. 31 is a diagram of a structure of a second communication apparatus 3100 according to an embodiment of this application. The second communication apparatus 3100 includes a photoelectric detector 3101. The photoelectric detector 3101 is configured to receive a first radio frequency optical signal. The photoelectric detector 3101 is further configured to: perform optical-to-electrical conversion on the first radio frequency optical signal to obtain a unipolar-envelope modulated signal, and determine a first radio frequency electrical signal from the unipolar-envelope modulated signal. A passband of the photoelectric detector 3101 includes only a spectrum of a fundamental frequency signal in the unipolar-envelope modulated signal.

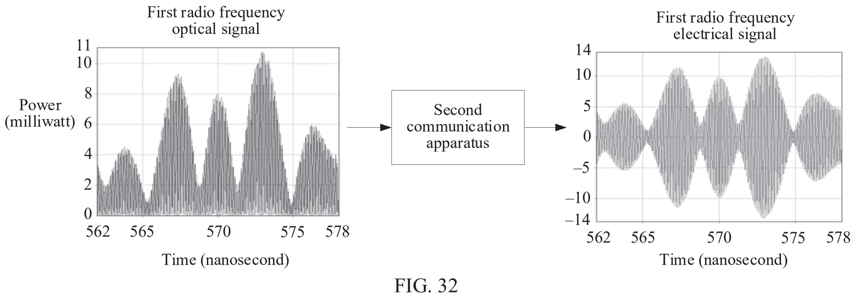

It can be learned that both the second communication apparatuses shown in FIG. 30 and FIG. 31 can be configured to: recover the first radio frequency electrical signal from the first radio frequency optical signal that is input to the second communication apparatus, and output the first radio frequency electrical signal, as shown in FIG. 32.

In an optional implementation, the second communication apparatus 3000 shown in FIG. 30 or the second communication apparatus 3100 shown in FIG. 31 may further include an antenna, and the antenna is configured to perform signal radiation on the first radio frequency electrical signal.

In addition, the second communication apparatuses shown in FIG. 30 and FIG. 31 may be configured to implement functions of the second communication apparatus in the foregoing signal transmission method, and also have corresponding beneficial effects. For specific descriptions thereof, refer to the foregoing related descriptions. Details are not described herein again.

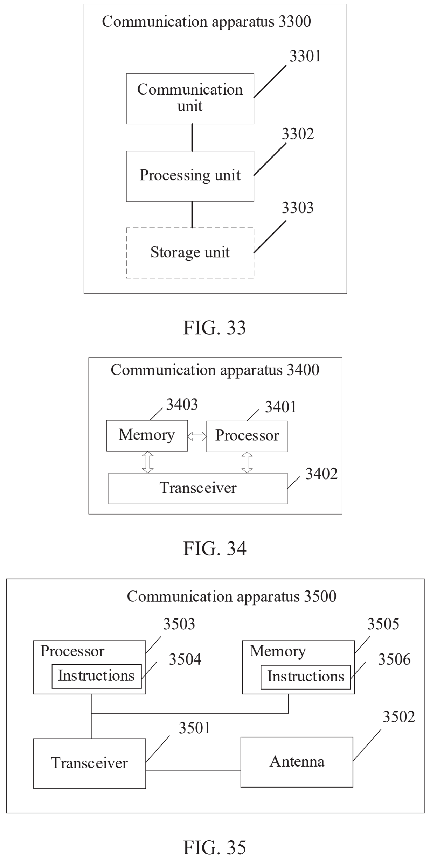

The first communication apparatus may alternatively have a structure shown in any one of FIG. 33 to FIG. 35 in addition to the structure shown in any one of FIG. 23 to FIG. 25 and FIG. 27 to FIG. 29, and the second communication apparatus may alternatively have the structure shown in any one of FIG. 33 to FIG. 35 in addition to the structure shown in FIG. 30 or FIG. 31.

As shown in FIG. 33, an embodiment of this application provides a communication apparatus 3300. The communication apparatus 3300 may be a first communication apparatus or a second communication apparatus, or may be a component (for example, an integrated circuit or a chip) of a first communication apparatus or a component (for example, an integrated circuit or a chip) of a second communication apparatus, and is configured to implement the method in the method embodiment of this application. The communication apparatus 3300 may include a communication unit 3301 and a processing unit 3302. The processing unit 3302 is configured to control the communication unit 3301 to receive and send data/signaling. Optionally, the communication apparatus 3300 may further include a storage unit 3303.

In a possible design, the communication apparatus 3300 is configured to implement functions of the first communication apparatus in embodiments of this application:

The processing unit 3302 is configured to convert a first radio frequency electrical signal into a unipolar-envelope modulated signal, where an upper envelope and a lower envelope of the first radio frequency electrical signal are symmetric with respect to a direct current component, and a carrier wave in the unipolar-envelope modulated signal is a sine wave.

The communication unit 3301 is configured to send a first radio frequency optical signal, where the first radio frequency optical signal is a unipolar-envelope radio frequency optical signal that is obtained by performing optical modulation on the unipolar-envelope modulated signal and whose lower envelope is flat and lower envelope amplitude is less than or equal to a first value.

The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

In an optional implementation, the first radio frequency electrical signal is determined based on a baseband signal. For the converting the first radio frequency electrical signal into the unipolar-envelope modulated signal, the processing unit 3302 is specifically configured to determine the unipolar-envelope modulated signal based on the first radio frequency electrical signal and a first electrical signal, where the first electrical signal is a baseband amplitude signal corresponding to the baseband signal, or the first electrical signal is an electrical signal obtained by inverting a baseband amplitude signal corresponding to the baseband signal.

In an optional implementation, for the determining the unipolar-envelope modulated signal based on the first radio frequency electrical signal and the first electrical signal, the processing unit 3302 is specifically configured to superimpose the first electrical signal onto the first radio frequency electrical signal to obtain the unipolar-envelope modulated signal.

In an optional implementation, the first electrical signal is time-synchronized with the first radio frequency electrical signal, and an amplitude of the first electrical signal is the same as an envelope amplitude of the first radio frequency electrical signal.

In an optional implementation, for the converting the first radio frequency electrical signal into the unipolar-envelope modulated signal, the processing unit 3302 is specifically configured to: convert the first radio frequency electrical signal into a second radio frequency electrical signal, where the second radio frequency electrical signal is a positive half-amplitude signal or a negative half-amplitude signal of the first radio frequency electrical signal with respect to the direct current component; filter the second radio frequency electrical signal to obtain a baseband signal and a fundamental frequency signal in the second radio frequency electrical signal; and adjust spectral amplitudes of the baseband signal and the fundamental frequency signal to obtain the unipolar-envelope modulated signal. The unipolar-envelope modulated signal includes an adjusted baseband signal and an adjusted fundamental frequency signal, and a difference between an amplitude of a baseband component and an amplitude of a fundamental frequency component in a spectrum corresponding to the unipolar-envelope modulated signal is less than or equal to a second value.

In an optional implementation, the processing unit 3302 is further configured to superimpose a first bias electrical signal onto the unipolar-envelope modulated signal by using an optical modulator. The processing unit 3302 is further configured to perform, by using the optical modulator, optical modulation on the unipolar-envelope modulated signal superimposed with the first bias electrical signal, to obtain the first radio frequency optical signal.

In an optional implementation, the optical modulator is a directly modulated laser, the first bias electrical signal is a first bias current signal, a current corresponding to the first bias current signal is greater than or equal to a threshold current of the directly modulated laser, and the current corresponding to the first bias current signal is less than a first current.

In an optional implementation, the optical modulator is an electro-absorption modulator or a Mach-Zehnder modulator, the first bias electrical signal is a first bias voltage signal, and a voltage corresponding to the first bias voltage signal is greater than a first voltage.

In an optional implementation, the processing unit 3302 is further configured to generate the first radio frequency electrical signal.

In another possible design, the communication apparatus 3300 is configured to implement functions of the second communication apparatus in embodiments of this application:

The communication unit 3301 is configured to receive a first radio frequency optical signal, where the first radio frequency optical signal is a unipolar-envelope radio frequency optical signal that is obtained by performing optical modulation on a unipolar-envelope modulated signal and whose lower envelope is flat and lower envelope amplitude is less than or equal to a first value, and a carrier wave in the unipolar-envelope modulated signal is a sine wave.

The processing unit 3302 is configured to convert the first radio frequency optical signal into a first radio frequency electrical signal, where an upper envelope and a lower envelope of the first radio frequency electrical signal are symmetric with respect to a direct current component.

The unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

In an optional implementation, the first radio frequency electrical signal that is converted from the first radio frequency optical signal is a fundamental frequency signal in the unipolar-envelope modulated signal obtained by performing optical-to-electrical conversion on the first radio frequency optical signal.

In an optional implementation, for the converting the first radio frequency optical signal into the first radio frequency electrical signal, the processing unit 3302 is specifically configured to: perform optical-to-electrical conversion on the first radio frequency optical signal by using a photoelectric detector, to obtain the unipolar-envelope modulated signal, where a passband of the photoelectric detector covers a spectrum of the fundamental frequency signal; and filter the unipolar-envelope modulated signal by using a band-pass filter, to obtain the first radio frequency electrical signal, where a passband of the band-pass filter includes only the spectrum of the fundamental frequency signal.

In an optional implementation, for the converting the first radio frequency optical signal into the first radio frequency electrical signal, the processing unit 3302 is specifically configured to: perform optical-to-electrical conversion on the first radio frequency optical signal by using a photoelectric detector to obtain the unipolar-envelope modulated signal, and determine the first radio frequency electrical signal from the unipolar-envelope modulated signal, where a passband of the photoelectric detector includes only a spectrum of the fundamental frequency signal.

In still another possible design, the communication apparatus 3300 is configured to implement functions of the first communication apparatus 2300 shown in any one of FIG. 23 to FIG. 25:

The processing unit 3302 may have a function of the coupling module 2301 and a function of the electrical-to-optical conversion module 2302 except sending a first radio frequency optical signal. The communication unit 3301 may have the function of the electrical-to-optical conversion module 2302 in sending the first radio frequency optical signal.

When the communication apparatus 3300 is configured to implement functions of the first communication apparatus 2300 shown in FIG. 24, the processing unit 3302 may further have a function of the baseband module 2303 in the first communication apparatus 2300 shown in FIG. 24. When the communication apparatus 3300 is configured to implement functions of the first communication apparatus 2300 shown in FIG. 25, the processing unit 3302 may further have a function of the baseband module 2303 and a function of the up-conversion module 2304 in the first communication apparatus 2300 shown in FIG. 25.

In still another possible design, the communication apparatus 3300 is configured to implement functions of the first communication apparatus 2700 shown in any one of FIG. 27 to FIG. 29:

The processing unit 3302 may have a function of the low-noise power amplifier 2701, a function of the low-pass filter 2702, and a function of the electrical-to-optical conversion module 2703 except sending a first radio frequency optical signal. The communication unit 3301 may have a function of the electrical-to-optical conversion module 2703 in sending the first radio frequency optical signal.

When the communication apparatus 3300 is configured to implement functions of the first communication apparatus 2700 shown in FIG. 28, the processing unit 3302 may further have a function of the baseband module 2704 in the first communication apparatus 2700 shown in FIG. 28. When the communication apparatus 3300 is configured to implement functions of the first communication apparatus 2700 shown in FIG. 29, the processing unit 3302 may further have a function of the baseband module 2704 and a function of the up-conversion module 2705 in the first communication apparatus 2700 shown in FIG. 29.

In still another possible design, the communication apparatus 3300 is configured to implement functions of the second communication apparatus 3000 shown in FIG. 30:

The communication unit 3301 may have a function of the photoelectric detector 3001 in receiving a first radio frequency optical signal, and the processing unit 3302 may have a function of the photoelectric detector 3001 except receiving the first radio frequency optical signal and a function of the band-pass filter 3002.

In still another possible design, the communication apparatus 3300 is configured to implement functions of the second communication apparatus 3100 shown in FIG. 31:

The communication unit 3301 may have a function of the photoelectric detector 3101 in receiving a first radio frequency optical signal, and the processing unit 3302 may have a function of the photoelectric detector 3101 except receiving the first radio frequency optical signal.

This embodiment of this application and the foregoing method embodiment are based on a same concept, and bring same technical effects. For a specific principle, refer to the descriptions in the foregoing embodiment. Details are not described again.

An embodiment of this application further provides a communication apparatus 3400, as shown in FIG. 34. The communication apparatus 3400 may be a first communication apparatus or a second communication apparatus, may be a chip, a chip system, a processor, or the like that supports a first communication apparatus to implement the foregoing method, or may be a chip, a chip system, a processor, or the like that supports a second communication apparatus to implement the foregoing method. The apparatus may be configured to implement the method described in the foregoing method embodiment. For details, refer to the descriptions in the foregoing method embodiment.

The communication apparatus 3400 may include a processor 3401. The processor 3401 may be a general-purpose processor, a dedicated processor, or the like. The processor 3401 may be, for example, a baseband processor, a digital signal processor, an application-specific integrated circuit, a field programmable gate array or another programmable logic component, a discrete gate or a transistor logic component, a discrete hardware component, or a central processing unit (central processing unit, CPU). The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program. The communication apparatus 3400 may further include a transceiver 3402. The transceiver 3402 may include a communication interface, or the transceiver 3402 may include a communication interface and a radio frequency processing module. The communication interface may be an input/output interface, an input interface, or an output interface. The communication apparatus 3400 may further include a memory 3403.

For example, in a possible design, the communication apparatus 3400 is configured to implement functions of the first communication apparatus 2300 shown in any one of FIG. 23 to FIG. 25 in embodiments of this application:
The transceiver 3402 may include a communication interface. The communication interface may have a function of the coupling module 2301 and a function of the electrical-to-optical conversion module 2302.

When the communication apparatus 3400 is configured to implement functions of the first communication apparatus 2300 shown in FIG. 24, the processor 3401 may have a function of the baseband module 2303 in the first communication apparatus 2300 shown in FIG. 24.

When the communication apparatus 3400 is configured to implement functions of the first communication apparatus 2300 shown in FIG. 25, the processor 3401 may have a function of the baseband module 2303 in the first communication apparatus 2300 shown in FIG. 25, the transceiver 3402 may further include a radio frequency processing module, and the radio frequency processing module may have a function of the up-conversion module 2304 in the first communication apparatus 2300 shown in FIG. 25.

In another possible design, the communication apparatus 3400 is configured to implement functions of the first communication apparatus 2700 shown in any one of FIG. 27 to FIG. 29 in embodiments of this application:
The transceiver 3402 may include a radio frequency processing module and a communication interface. The radio frequency processing module may have a function of the low-noise power amplifier 2701 and a function of the low-pass filter 2702, and the communication interface may have a function of the electrical-to-optical conversion module 2703.

When the communication apparatus 3400 is configured to implement functions of the first communication apparatus 2700 shown in FIG. 28, the processor 3401 may have a function of the baseband module 2704 in the first communication apparatus 2700 shown in FIG. 28.

When the communication apparatus 3400 is configured to implement functions of the first communication apparatus 2700 shown in FIG. 29, the processor 3401 may have a function of the baseband module 2303 in the first communication apparatus 2700 shown in FIG. 29, and the radio frequency processing module in the transceiver 3402 may further have a function of the up-conversion module 2705 in the first communication apparatus 2700 shown in FIG. 29.

In another possible design, the communication apparatus 3400 is configured to implement functions of the second communication apparatus 3000 shown in FIG. 30 in embodiments of this application: The transceiver 3402 may include a communication interface and a radio frequency processing module. The communication interface may have a function of the photoelectric detector 3001, and the radio frequency processing module may have a function of the band-pass filter 3002.

In another possible design, the communication apparatus 3400 is configured to implement functions of the second communication apparatus 3100 shown in FIG. 31 in embodiments of this application: The transceiver 3402 may include a communication interface, and the communication interface may have a function of the photoelectric detector 3101.

An embodiment of this application further provides a communication apparatus 3500, as shown in FIG. 35. The communication apparatus 3500 may include a transceiver 3501 and an antenna 3502. The communication apparatus 3500 may have functions of the first communication apparatus or the second communication apparatus in the foregoing method embodiment, and may be configured to implement the method described in the foregoing method embodiment. For details, refer to the descriptions in the foregoing method embodiment.

For example, in a possible design, the communication apparatus 3500 is configured to implement functions of the first communication apparatus 2700 shown in FIG. 27 in embodiments of this application:
The antenna 3502 may be configured to receive a first radio frequency electrical signal. The transceiver 3501 may include a radio frequency processing module and a communication interface. The antenna 3502 may be connected to the radio frequency processing module. The radio frequency processing module may have a function of the low-noise power amplifier 2701, and is configured to convert the first radio frequency electrical signal received by the antenna 3502 into a second radio frequency electrical signal. The radio frequency processing module may further have a function of the low-pass filter 2702. The communication interface may have a function of the electrical-to-optical conversion module 2703.

In another possible design, the communication apparatus 3500 is configured to implement functions of the second communication apparatus 3000 shown in FIG. 30 in embodiments of this application: The transceiver 3501 may include a communication interface and a radio frequency processing module. The communication interface may have a function of the photoelectric detector 3001, and the radio frequency processing module may have a function of the band-pass filter 3002. The transceiver 3501 may be further configured to output an obtained first radio frequency electrical signal to the antenna 3502. The antenna 3502 may be configured to perform signal radiation on the first radio frequency electrical signal.

In another possible design, the communication apparatus 3500 is configured to implement functions of the second communication apparatus 3100 shown in FIG. 31 in embodiments of this application: The transceiver 3501 may include a communication interface, and the communication interface may have a function of the photoelectric detector 3101. The transceiver 3501 may be further configured to output an obtained first radio frequency electrical signal to the antenna 3502. The antenna 3502 may be configured to perform signal radiation on the first radio frequency electrical signal.

In addition, the communication apparatus 3500 may further include a processor 3503, where the processor 3503 may store instructions 3504, and the instructions 3504 may be run, to enable the communication apparatus 3500 to perform the method described in the foregoing method embodiment. The instructions 3504 may be embedded in the processor 3503. In this case, the processor 3503 may be implemented by hardware.

Optionally, the communication apparatus 3500 may include one or more memories 3505, where the memory 3505 may store instructions 3506, and the instructions may be run, to enable the communication apparatus 3500 to perform the method described in the foregoing method embodiment. Optionally, the memory 3505 may further store data. The processor 3503 and the memory 3505 may be separately disposed, or may be integrated.

The memory 3505 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM, a compact disc read-only memory (compact disc read-only memory, CD-ROM), or the like.

Optionally, the communication apparatus 3400 or the communication apparatus 3500 may further include a circuit, and the circuit may implement a sending, receiving, or communication function in the foregoing method embodiment. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-channel metal-oxide-semiconductor (nMetal-oxide-semiconductor, NMOS), a P-channel metal-oxide-semiconductor (positive channel metal-oxide-semiconductor, PMOS), a bipolar junction transistor (bipolar junction transistor, BJT), a bipolar CMOS (BiCMOS), silicon germanium (SiGe), and gallium arsenide (GaAs).

This embodiment of this application and the foregoing signal transmission method are based on a same concept, and bring same technical effects. For a specific principle, refer to the descriptions in the foregoing signal transmission method. Details are not described again.

A person skilled in the art may further understand that various illustrative logical blocks (illustrative logic blocks) and steps (steps) that are listed in embodiments of this application may be implemented by electronic hardware, computer software, or a combination thereof. Whether the functions are implemented by hardware or software depends on particular applications and a design requirement of an entire system. A person skilled in the art may use various methods to implement the described functions for each particular application, but it should not be considered that the implementation goes beyond the protection scope of embodiments of this application.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program runs on a computer, a function in any one of the foregoing method embodiments is implemented.

This application further provides a communication system. The system includes the first communication apparatus and the second communication apparatus in the foregoing aspects. In another possible design, the system may further include another device that interacts with the first communication apparatus and/or the second communication apparatus in the solutions provided in this application.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, a fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" indicates an "or" relationship between associated objects. In a formula in this application, the character "/" indicates a "division" relationship between associated objects.

It may be understood that various numbers in embodiments of this application are merely for differentiation for ease of description, and are not intended to limit the scope of embodiments of this application. Sequence numbers of the foregoing processes do not mean an execution sequence, and the execution sequence of the processes should be determined based on functions and internal logic of the processes.

**Claims**

1. A signal transmission method, wherein the method comprises:

   converting a first radio frequency electrical signal into a unipolar-envelope modulated signal, wherein an upper envelope and a lower envelope of the first radio frequency electrical signal are symmetric with respect to a direct current component, and a carrier wave in the unipolar-envelope modulated signal is a sine wave; and
   sending a first radio frequency optical signal, wherein the first radio frequency optical signal is a unipolar-envelope radio frequency optical signal that is obtained by performing optical modulation on the unipolar-envelope modulated signal and whose lower envelope is flat and lower envelope amplitude is less than or equal to a first value, wherein
   the unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

2. The method according to claim 1, wherein the first radio frequency electrical signal is determined based on a baseband signal; and the converting the first radio frequency electrical signal into the unipolar-envelope modulated signal comprises:

   determining the unipolar-envelope modulated signal based on the first radio frequency electrical signal and a first electrical signal, wherein
   the first electrical signal is a baseband amplitude signal corresponding to the baseband signal, or the first electrical signal is an electrical signal obtained by inverting a baseband amplitude signal corresponding to the baseband signal.

3. The method according to claim 2, wherein the determining the unipolar-envelope modulated signal based on the first radio frequency electrical signal and the first electrical signal comprises:
   superimposing the first electrical signal onto the first radio frequency electrical signal to obtain the unipolar-envelope modulated signal.

4. The method according to claim 2 or 3, wherein
   the first electrical signal is time-synchronized with the first radio frequency electrical signal, and an amplitude of the first electrical signal is the same as an envelope amplitude of the first radio frequency electrical signal.

**EP 4 716 116 A1**

5. The method according to claim 1, wherein the converting the first radio frequency electrical signal into the unipolar-envelope modulated signal comprises:

converting the first radio frequency electrical signal into a second radio frequency electrical signal, wherein the second radio frequency electrical signal is a positive half-amplitude signal or a negative half-amplitude signal of the first radio frequency electrical signal with respect to the direct current component;
filtering the second radio frequency electrical signal to obtain a baseband signal and a fundamental frequency signal in the second radio frequency electrical signal; and
adjusting spectral amplitudes of the baseband signal and the fundamental frequency signal to obtain the unipolar-envelope modulated signal, wherein
the unipolar-envelope modulated signal comprises the adjusted baseband signal and the adjusted fundamental frequency signal, and a difference between an amplitude of a baseband component and an amplitude of a fundamental frequency component in a spectrum corresponding to the unipolar-envelope modulated signal is less than or equal to a second value.

6. The method according to any one of claims 1 to 5, wherein the method further comprises:

superimposing a first bias electrical signal onto the unipolar-envelope modulated signal by using an optical modulator; and
performing, by using the optical modulator, optical modulation on the unipolar-envelope modulated signal superimposed with the first bias electrical signal, to obtain the first radio frequency optical signal.

7. The method according to claim 6, wherein

the optical modulator is a directly modulated laser, and the first bias electrical signal is a first bias current signal; and
a current corresponding to the first bias current signal is greater than or equal to a threshold current of the directly modulated laser, and the current corresponding to the first bias current signal is less than a first current.

8. The method according to claim 6, wherein
the optical modulator is an electro-absorption modulator or a Mach-Zehnder modulator, the first bias electrical signal is a first bias voltage signal, and a voltage corresponding to the first bias voltage signal is greater than a first voltage.

9. The method according to any one of claims 1 to 8, wherein the method further comprises: generating the first radio frequency electrical signal.

10. A signal transmission method, wherein the method comprises:

receiving a first radio frequency optical signal, wherein the first radio frequency optical signal is a unipolar-envelope radio frequency optical signal that is obtained by performing optical modulation on a unipolar-envelope modulated signal and whose lower envelope is flat and lower envelope amplitude is less than or equal to a first value, and a carrier wave in the unipolar-envelope modulated signal is a sine wave; and
converting the first radio frequency optical signal into a first radio frequency electrical signal, wherein an upper envelope and a lower envelope of the first radio frequency electrical signal are symmetric with respect to a direct current component, wherein
the unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

11. The method according to claim 10, wherein
the first radio frequency electrical signal that is converted from the first radio frequency optical signal is a fundamental frequency signal in the unipolar-envelope modulated signal obtained by performing optical-to-electrical conversion on the first radio frequency optical signal.

12. The method according to claim 11, wherein the converting the first radio frequency optical signal into the first radio frequency electrical signal comprises:

performing optical-to-electrical conversion on the first radio frequency optical signal by using a photoelectric detector to obtain the unipolar-envelope modulated signal, wherein a passband of the photoelectric detector covers a spectrum of the fundamental frequency signal; and

filtering the unipolar-envelope modulated signal by using a band-pass filter to obtain the first radio frequency electrical signal, wherein a passband of the band-pass filter comprises only the spectrum of the fundamental frequency signal.

13. The method according to claim 11, wherein the converting the first radio frequency optical signal into the first radio frequency electrical signal comprises:

performing optical-to-electrical conversion on the first radio frequency optical signal by using a photoelectric detector to obtain the unipolar-envelope modulated signal, and determining the first radio frequency electrical signal from the unipolar-envelope modulated signal, wherein a passband of the photoelectric detector comprises only a spectrum of the fundamental frequency signal.

14. A signal transmission method, wherein the method comprises:

converting, by a first communication apparatus, a first radio frequency electrical signal into a unipolar-envelope modulated signal, wherein an upper envelope and a lower envelope of the first radio frequency electrical signal are symmetric with respect to a direct current component, and a carrier wave in the unipolar-envelope modulated signal is a sine wave;

sending, by the first communication apparatus, a first radio frequency optical signal, wherein the first radio frequency optical signal is a unipolar-envelope radio frequency optical signal that is obtained by performing optical modulation on the unipolar-envelope modulated signal and whose lower envelope is flat and lower envelope amplitude is less than or equal to a first value;

receiving, by a second communication apparatus, the first radio frequency optical signal; and

converting, by the second communication apparatus, the first radio frequency optical signal into the first radio frequency electrical signal, wherein

the unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

15. The method according to claim 14, wherein the first radio frequency electrical signal is determined based on a baseband signal; and the converting, by the first communication apparatus, the first radio frequency electrical signal into the unipolar-envelope modulated signal comprises:

determining, by the first communication apparatus, the unipolar-envelope modulated signal based on the first radio frequency electrical signal and a first electrical signal, wherein

the first electrical signal is a baseband amplitude signal corresponding to the baseband signal, or the first electrical signal is an electrical signal obtained by inverting a baseband amplitude signal corresponding to the baseband signal.

16. The method according to claim 15, wherein the determining, by the first communication apparatus, the unipolar-envelope modulated signal based on the first radio frequency electrical signal and the first electrical signal comprises:
superimposing, by the first communication apparatus, the first electrical signal onto the first radio frequency electrical signal to obtain the unipolar-envelope modulated signal.

17. The method according to claim 15 or 16, wherein
the first electrical signal is time-synchronized with the first radio frequency electrical signal, and an amplitude of the first electrical signal is the same as an envelope amplitude of the first radio frequency electrical signal.

18. The method according to claim 14, wherein the converting, by the first communication apparatus, the first radio frequency electrical signal into the unipolar-envelope modulated signal comprises:

converting, by the first communication apparatus, the first radio frequency electrical signal into a second radio frequency electrical signal, wherein the second radio frequency electrical signal is a positive half-amplitude signal or a negative half-amplitude signal of the first radio frequency electrical signal with respect to the direct current component;

filtering, by the first communication apparatus, the second radio frequency electrical signal to obtain a baseband signal and a fundamental frequency signal in the second radio frequency electrical signal; and

adjusting, by the first communication apparatus, spectral amplitudes of the baseband signal and the fundamental frequency signal to obtain the unipolar-envelope modulated signal, wherein

the unipolar-envelope modulated signal comprises the adjusted baseband signal and the adjusted fundamental frequency signal, and a difference between an amplitude of a baseband component and an amplitude of a fundamental frequency component in a spectrum corresponding to the unipolar-envelope modulated signal is less than or equal to a second value.

19. The method according to any one of claims 14 to 18, wherein the method further comprises:

superimposing, by the first communication apparatus, a first bias electrical signal onto the unipolar-envelope modulated signal by using an optical modulator; and

performing, by the first communication apparatus by using the optical modulator, optical modulation on the unipolar-envelope modulated signal superimposed with the first bias electrical signal, to obtain the first radio frequency optical signal.

20. The method according to claim 19, wherein

the optical modulator is a directly modulated laser, and the first bias electrical signal is a first bias current signal; and

a current corresponding to the first bias current signal is greater than or equal to a threshold current of the directly modulated laser, and the current corresponding to the first bias current signal is less than a first current.

21. The method according to claim 19, wherein

the optical modulator is an electro-absorption modulator or a Mach-Zehnder modulator, the first bias electrical signal is a first bias voltage signal, and a voltage corresponding to the first bias voltage signal is greater than a first voltage.

22. The method according to any one of claims 14 to 21, wherein the method further comprises:

generating, by the first communication apparatus, the first radio frequency electrical signal.

23. The method according to any one of claims 14 to 22, wherein

the first radio frequency electrical signal that is converted by the second communication apparatus from the first radio frequency optical signal is a fundamental frequency signal in the unipolar-envelope modulated signal obtained by the second communication apparatus by performing optical-to-electrical conversion on the first radio frequency optical signal.

24. The method according to claim 23, wherein the converting, by the second communication apparatus, the first radio frequency optical signal into the first radio frequency electrical signal comprises:

performing, by the second communication apparatus, optical-to-electrical conversion on the first radio frequency optical signal by using a photoelectric detector to obtain the unipolar-envelope modulated signal, wherein a passband of the photoelectric detector covers a spectrum of the fundamental frequency signal in the unipolar-envelope modulated signal; and

filtering, by the second communication apparatus, the unipolar-envelope modulated signal by using a band-pass filter to obtain the first radio frequency electrical signal, wherein a passband of the band-pass filter comprises only the spectrum of the fundamental frequency signal in the unipolar-envelope modulated signal.

25. The method according to claim 23, wherein the converting, by the second communication apparatus, the first radio frequency optical signal into the first radio frequency electrical signal comprises:

performing, by the second communication apparatus, optical-to-electrical conversion on the first radio frequency optical signal by using a photoelectric detector to obtain the unipolar-envelope modulated signal, and determining the first radio frequency electrical signal from the unipolar-envelope modulated signal, wherein a passband of the photoelectric detector comprises only a spectrum of the fundamental frequency signal in the unipolar-envelope modulated signal.

26. A communication apparatus, wherein the communication apparatus comprises:

a coupling module, configured to: superimpose a first electrical signal onto a first radio frequency electrical signal to obtain a unipolar-envelope modulated signal, and output the unipolar-envelope modulated signal to an optical modulator, wherein the first radio frequency electrical signal is determined based on a baseband signal, an upper envelope and a lower envelope of the first radio frequency electrical signal are symmetric with respect to a direct current component, and a carrier wave in the unipolar-envelope modulated signal is a sine wave; and

the optical modulator, configured to perform optical modulation on the unipolar-envelope modulated signal to obtain a first radio frequency optical signal, wherein the first radio frequency optical signal is a unipolar-envelope radio frequency optical signal whose lower envelope is flat and lower envelope amplitude is less than or equal to a first value, wherein

the optical modulator is further configured to send the first radio frequency optical signal;

the first electrical signal is a baseband amplitude signal corresponding to the baseband signal, or the first electrical signal is an electrical signal obtained by inverting a baseband amplitude signal corresponding to the baseband signal; and

the unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

27. The apparatus according to claim 26, wherein
the first electrical signal is time-synchronized with the first radio frequency electrical signal, and an amplitude of the first electrical signal is the same as an envelope amplitude of the first radio frequency electrical signal.

28. The apparatus according to claim 26 or 27, wherein for the performing optical modulation on the unipolar-envelope modulated signal to obtain the first radio frequency electrical signal, the optical modulator is specifically configured to:

superimpose a first bias electrical signal onto the unipolar-envelope modulated signal; and
perform optical modulation on the unipolar-envelope modulated signal superimposed with the first bias electrical signal, to obtain the first radio frequency optical signal.

29. The apparatus according to claim 28, wherein

the optical modulator is a directly modulated laser, and the first bias electrical signal is a first bias current signal; and
a current corresponding to the first bias current signal is greater than or equal to a threshold current of the directly modulated laser, and the current corresponding to the first bias current signal is less than a first current.

30. The apparatus according to claim 28, wherein
the optical modulator is an electro-absorption modulator or a Mach-Zehnder modulator, the first bias electrical signal is a first bias voltage signal, and a voltage corresponding to the first bias voltage signal is greater than a first voltage.

31. The apparatus according to any one of claims 26 to 30, wherein the apparatus further comprises:

a baseband module, configured to: generate the first electrical signal, and output the first electrical signal to the coupling module, wherein
the baseband module is further configured to: generate the first radio frequency electrical signal, and output the first radio frequency electrical signal to the coupling module.

32. The apparatus according to any one of claims 26 to 30, wherein the apparatus further comprises:

a baseband module, configured to: generate the first electrical signal, and output the first electrical signal to the coupling module, wherein
the baseband module is further configured to: generate the baseband signal or an intermediate frequency signal corresponding to the baseband signal, and output the baseband signal or the intermediate frequency signal corresponding to the baseband signal to an up-conversion module; and
the up-conversion module, configured to: perform up-conversion processing on the baseband signal or the intermediate frequency signal corresponding to the baseband signal to obtain the first radio frequency electrical signal, and output the first radio frequency electrical signal to the coupling module.

**33.** A communication apparatus, wherein the apparatus comprises:

a low-noise power amplifier, configured to: convert a first radio frequency electrical signal into a second radio frequency electrical signal, and output the second radio frequency electrical signal to a low-pass filter, wherein an upper envelope and a lower envelope of the first radio frequency electrical signal are symmetric with respect to a direct current component, and the second radio frequency electrical signal is a positive half-amplitude signal or a negative half-amplitude signal of the first radio frequency electrical signal with respect to the direct current component;

the low-pass filter, configured to: filter the second radio frequency electrical signal to obtain a baseband signal and a fundamental frequency signal in the second radio frequency electrical signal, adjust spectral amplitudes of the baseband signal and the fundamental frequency signal to obtain a unipolar-envelope modulated signal, and output the unipolar-envelope modulated signal to an optical modulator, wherein a carrier wave in the unipolar-envelope modulated signal is a sine wave; and

the optical modulator, configured to perform optical modulation on the unipolar-envelope modulated signal to obtain a first radio frequency optical signal, wherein the first radio frequency optical signal is a unipolar-envelope radio frequency optical signal whose lower envelope is flat and lower envelope amplitude is less than or equal to a first value, wherein

the optical modulator is further configured to send the first radio frequency optical signal;

the unipolar-envelope modulated signal comprises the adjusted baseband signal and the adjusted fundamental frequency signal, and a difference between an amplitude of a baseband component and an amplitude of a fundamental frequency component in a spectrum corresponding to the unipolar-envelope modulated signal is less than or equal to a second value; and

the unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

**34.** The apparatus according to claim 33, wherein
the low-noise power amplifier is a class-B low-noise power amplifier, a class-AB low-noise power amplifier, or a class-C low-noise power amplifier.

**35.** The apparatus according to claim 33 or 34, wherein for the performing optical modulation on the unipolar-envelope modulated signal to obtain the first radio frequency optical signal, the optical modulator is specifically configured to:

superimpose a first bias electrical signal onto the unipolar-envelope modulated signal; and
perform optical modulation on the unipolar-envelope modulated signal superimposed with the first bias electrical signal, to obtain the first radio frequency optical signal.

**36.** The apparatus according to claim 35, wherein

the optical modulator is a directly modulated laser, and the first bias electrical signal is a first bias current signal; and
a current corresponding to the first bias current signal is greater than or equal to a threshold current of the directly modulated laser, and the current corresponding to the first bias current signal is less than a first current.

**37.** The apparatus according to claim 35, wherein
the optical modulator is an electro-absorption modulator or a Mach-Zehnder modulator, the first bias electrical signal is a first bias voltage signal, and a voltage corresponding to the first bias voltage signal is greater than a first voltage.

**38.** The apparatus according to any one of claims 33 to 37, wherein the apparatus further comprises:
a baseband module, configured to: generate the first radio frequency electrical signal, and output the first radio frequency electrical signal to the low-noise power amplifier.

**39.** The apparatus according to any one of claims 33 to 37, wherein the apparatus further comprises:

a baseband module, configured to: generate the baseband signal or an intermediate frequency signal corresponding to the baseband signal, and output the baseband signal or the intermediate frequency signal corresponding to the baseband signal to an up-conversion module; and

the up-conversion module, configured to: perform up-conversion processing on the baseband signal or the intermediate frequency signal corresponding to the baseband signal to obtain the first radio frequency electrical signal, and output the first radio frequency electrical signal to the low-noise power amplifier.

40. A communication apparatus, wherein the apparatus comprises:

a photoelectric detector, configured to receive a first radio frequency optical signal, wherein the first radio frequency optical signal is a unipolar-envelope radio frequency optical signal that is obtained by performing optical modulation on a unipolar-envelope modulated signal and whose lower envelope is flat and lower envelope amplitude is less than or equal to a first value, and a carrier wave in the unipolar-envelope modulated signal is a sine wave, wherein

the photoelectric detector is further configured to: perform optical-to-electrical conversion on the first radio frequency optical signal to obtain the unipolar-envelope modulated signal, and output the unipolar-envelope modulated signal to a band-pass filter, wherein a passband of the photoelectric detector covers a spectrum of a fundamental frequency signal in the unipolar-envelope modulated signal; and

the band-pass filter, configured to filter the unipolar-envelope modulated signal to obtain the first radio frequency electrical signal, wherein a passband of the band-pass filter comprises only the spectrum of the fundamental frequency signal in the unipolar-envelope modulated signal, and an upper envelope and a lower envelope of the first radio frequency electrical signal are symmetric with respect to a direct current component, wherein

the unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

41. A communication apparatus, wherein the apparatus comprises:

a photoelectric detector, configured to receive a first radio frequency optical signal, wherein the first radio frequency optical signal is a unipolar-envelope radio frequency optical signal that is obtained by performing optical modulation on a unipolar-envelope modulated signal and whose lower envelope is flat and lower envelope amplitude is less than or equal to a first value, and a carrier wave in the unipolar-envelope modulated signal is a sine wave, wherein

the photoelectric detector is further configured to: perform optical-to-electrical conversion on the first radio frequency optical signal to obtain the unipolar-envelope modulated signal, and determine the first radio frequency electrical signal from the unipolar-envelope modulated signal, wherein a passband of the photoelectric detector comprises only a spectrum of a fundamental frequency signal in the unipolar-envelope modulated signal, and an upper envelope and a lower envelope of the first radio frequency electrical signal are symmetric with respect to a direct current component; and

the unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

42. A communication apparatus, wherein the apparatus comprises:

a processing unit, configured to convert a first radio frequency electrical signal into a unipolar-envelope modulated signal, wherein an upper envelope and a lower envelope of the first radio frequency electrical signal are symmetric with respect to a direct current component, and a carrier wave in the unipolar-envelope modulated signal is a sine wave; and

a communication unit, configured to send a first radio frequency optical signal, wherein the first radio frequency optical signal is a unipolar-envelope radio frequency optical signal that is obtained by performing optical modulation on the unipolar-envelope modulated signal and whose lower envelope is flat and lower envelope amplitude is less than or equal to a first value, wherein

the unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

43. The apparatus according to claim 42, wherein the first radio frequency electrical signal is determined based on a baseband signal; and for the converting the first radio frequency electrical signal into the unipolar-envelope modulated signal, the processing unit is specifically configured to:

  determine the unipolar-envelope modulated signal based on the first radio frequency electrical signal and a first electrical signal, wherein
  the first electrical signal is a baseband amplitude signal corresponding to the baseband signal, or the first electrical signal is an electrical signal obtained by inverting a baseband amplitude signal corresponding to the baseband signal.

44. The apparatus according to claim 43, wherein for the determining the unipolar-envelope modulated signal based on the first radio frequency electrical signal and the first electrical signal, the processing unit is specifically configured to: superimpose the first electrical signal onto the first radio frequency electrical signal to obtain the unipolar-envelope modulated signal.

45. The apparatus according to claim 43 or 44, wherein the first electrical signal is time-synchronized with the first radio frequency electrical signal, and an amplitude of the first electrical signal is the same as an envelope amplitude of the first radio frequency electrical signal.

46. The apparatus according to claim 42, wherein for the converting the first radio frequency electrical signal into the unipolar-envelope modulated signal, the processing unit is specifically configured to:

  convert the first radio frequency electrical signal into a second radio frequency electrical signal, wherein the second radio frequency electrical signal is a positive half-amplitude signal or a negative half-amplitude signal of the first radio frequency electrical signal with respect to the direct current component;
  filter the second radio frequency electrical signal to obtain a baseband signal and a fundamental frequency signal in the second radio frequency electrical signal; and
  adjust spectral amplitudes of the baseband signal and the fundamental frequency signal to obtain the unipolar-envelope modulated signal, wherein
  the unipolar-envelope modulated signal comprises the adjusted baseband signal and the adjusted fundamental frequency signal, and a difference between an amplitude of a baseband component and an amplitude of a fundamental frequency component in a spectrum corresponding to the unipolar-envelope modulated signal is less than or equal to a second value.

47. The apparatus according to any one of claims 42 to 46, wherein

  the processing unit is further configured to superimpose a first bias electrical signal onto the unipolar-envelope modulated signal by using an optical modulator; and
  the processing unit is further configured to perform, by using the optical modulator, optical modulation on the unipolar-envelope modulated signal superimposed with the first bias electrical signal, to obtain the first radio frequency optical signal.

48. The apparatus according to claim 47, wherein

  the optical modulator is a directly modulated laser, and the first bias electrical signal is a first bias current signal; and
  a current corresponding to the first bias current signal is greater than or equal to a threshold current of the directly modulated laser, and the current corresponding to the first bias current signal is less than a first current.

49. The apparatus according to claim 47, wherein
  the optical modulator is an electro-absorption modulator or a Mach-Zehnder modulator, the first bias electrical signal is a first bias voltage signal, and a voltage corresponding to the first bias voltage signal is greater than a first voltage.

50. The apparatus according to any one of claims 42 to 49, wherein
  the processing unit is further configured to generate the first radio frequency electrical signal.

**51.** A communication apparatus, wherein the apparatus comprises:

a communication unit, configured to receive a first radio frequency optical signal, wherein the first radio frequency optical signal is a unipolar-envelope radio frequency optical signal that is obtained by performing optical modulation on a unipolar-envelope modulated signal and whose lower envelope is flat and lower envelope amplitude is less than or equal to a first value, and a carrier wave in the unipolar-envelope modulated signal is a sine wave; and

a processing unit, configured to convert the first radio frequency optical signal into a first radio frequency electrical signal, wherein an upper envelope and a lower envelope of the first radio frequency electrical signal are symmetric with respect to a direct current component, wherein

the unipolar-envelope modulated signal is a radio frequency electrical signal with a flat lower envelope, and an upper envelope of the unipolar-envelope modulated signal corresponds to the upper envelope of the first radio frequency electrical signal; or the unipolar-envelope modulated signal is a radio frequency electrical signal with a flat upper envelope, and a lower envelope of the unipolar-envelope modulated signal corresponds to the lower envelope of the first radio frequency electrical signal.

**52.** The apparatus according to claim 51, wherein
the first radio frequency electrical signal that is converted from the first radio frequency optical signal is a fundamental frequency signal in the unipolar-envelope modulated signal obtained by performing optical-to-electrical conversion on the first radio frequency optical signal.

**53.** The apparatus according to claim 52, wherein for the converting the first radio frequency optical signal into the first radio frequency electrical signal, the processing unit is specifically configured to:

perform optical-to-electrical conversion on the first radio frequency optical signal by using a photoelectric detector to obtain the unipolar-envelope modulated signal, wherein a passband of the photoelectric detector covers a spectrum of the fundamental frequency signal; and

filter the unipolar-envelope modulated signal by using a band-pass filter to obtain the first radio frequency electrical signal, wherein a passband of the band-pass filter comprises only the spectrum of the fundamental frequency signal.

**54.** The apparatus according to claim 52, wherein for the converting the first radio frequency optical signal into the first radio frequency electrical signal, the processing unit is specifically configured to:
perform optical-to-electrical conversion on the first radio frequency optical signal by using a photoelectric detector to obtain the unipolar-envelope modulated signal, and determine the first radio frequency electrical signal from the unipolar-envelope modulated signal, wherein a passband of the photoelectric detector comprises only a spectrum of the fundamental frequency signal.

**55.** A communication apparatus, comprising a memory and a processor, wherein

the memory is configured to store instructions or a computer program; and
the processor is configured to execute the computer program or the instructions stored in the memory, to enable the communication apparatus to perform the method according to any one of claims 1 to 9, or enable the communication apparatus to perform the method according to any one of claims 10 to 13.

**56.** A communication system, wherein the communication system comprises a first communication apparatus and a second communication apparatus, wherein

the first communication apparatus is configured to perform the method according to any one of claims 1 to 9; and
the second communication apparatus is configured to perform the method according to any one of claims 10 to 13.

**57.** A computer-readable storage medium, wherein the computer-readable storage medium stores a computer program; and when the computer program runs, the method according to any one of claims 1 to 9 is implemented, or the method according to any one of claims 10 to 13 is implemented.

**58.** A computer program product, wherein the computer program product comprises computer program code; and when the computer program code is run, the method according to any one of claims 1 to 9 is implemented, or the method according to any one of claims 10 to 13 is implemented.

EP 4 716 116 A1

Fiber optics transmission
section

Center end

Antenna end

Radio frequency
electrical signal
#1 → Electrical-
to-optical
conversion →

Radio frequency
electrical signal
#2 → Electrical-
to-optical
conversion →

...

Radio frequency
electrical signal
#N−1 → Electrical-
to-optical
conversion →

Radio frequency
electrical signal
#N → Electrical-
to-optical
conversion →

Wavelength
division
multiplexer

Optical
parametric
amplifier

Fiber

Wavelength
division
demultiplexer

Photoelectric
diode PD →

PD →

...

PD →

PD →

Antenna

FIG. 1

FIG. 2

FIG. 3

FIG. 4

FIG. 5

FIG. 6

Fiber

Primary ONU

Optical splitter

Secondary ONU

ONU: Optical network terminal

FIG. 7

FIG. 8

FIG. 9

FIG. 10

FIG. 11

FIG. 12

FIG. 13a

FIG. 13b

FIG. 14

FIG. 15a

FIG. 15b

FIG. 16

FIG. 17

FIG. 18

Spectrum corresponding to a second radio frequency
electrical signal

FIG. 19a

Spectrum corresponding to a
unipolar-envelope modulated signal

FIG. 19b

FIG. 20a

FIG. 20b

FIG. 21

FIG. 22

First communication apparatus 2300

Coupling module 2301 → Unipolar-envelope modulated signal → Electrical-to-optical conversion module 2302 → First radio frequency optical signal

FIG. 23

First communication apparatus 2300

Digital baseband signal → Baseband module 2303

First electrical signal → Coupling module 2301

First radio frequency electrical signal → Coupling module 2301

Coupling module 2301 → Unipolar-envelope modulated signal → Electrical-to-optical conversion module 2302 → First radio frequency optical signal

FIG. 24

First communication apparatus 2300

First electrical signal

Digital baseband signal → Baseband module 2303

Baseband signal/ Intermediate frequency signal → Up-conversion module 2304

First radio frequency electrical signal → Coupling module 2301

Unipolar-envelope modulated signal → Electrical-to-optical conversion module 2302 → First radio frequency optical signal

FIG. 25

Digital
baseband → First
signal communication → Power
apparatus (milliwatt)

First radio frequency
optical signal

11
10

8

6

4

2

0
562   565      570      575   578
Time (nanosecond)

FIG. 26

First communication apparatus 2700

Low-noise
power amplifier
2701
→ Second radio
frequency
electrical
signal →
Low-pass
filter 2702
→ Unipolar-
envelope
modulated
signal →
Electrical-to-
optical
conversion
module 2703
→ First radio
frequency
optical
signal →

FIG. 27

First communication apparatus 2700

Digital baseband signal → Baseband module 2704 → First radio frequency electrical signal → Low-noise power amplifier 2701 → Second radio frequency electrical signal → Low-pass filter 2702 → Unipolar-envelope modulated signal → Electrical-to-optical conversion module 2703 → First radio frequency optical signal

FIG. 28

FIG. 29

First communication apparatus 2700

Digital baseband signal → Baseband module 2704 → Baseband signal/Intermediate frequency signal → Up-conversion module 2705 → First radio frequency electrical signal → Low-noise power amplifier 2701 → Second radio frequency electrical signal → Low-pass filter 2702 → Unipolar-envelope modulated signal → Electrical-to-optical conversion module 2703 → First radio frequency optical signal

Second communication
apparatus 3000

| Photoelectric detector 3001 | Band-pass filter 3002 |

FIG. 30

Second communication
apparatus 3100

| Photoelectric detector 3101 |

FIG. 31

First radio frequency
electrical signal

First radio frequency
optical signal

Second
communication
apparatus

Time (nanosecond)

Time (nanosecond)

Power
(milliwatt)

FIG. 32

Communication apparatus 3300

Communication unit — 3301

Processing unit — 3302

Storage unit — 3303

FIG. 33

Communication apparatus 3400

3403
Memory — 3401 Processor

3402
Transceiver

FIG. 34

Communication apparatus 3500

3503
Processor — 3504
Instructions

3505
Memory — 3506
Instructions

3501
Transceiver — 3502
Antenna

FIG. 35

## INTERNATIONAL SEARCH REPORT

| | |
|---|---|
| International application No. | |
| | **PCT/CN2023/103923** |

**A. CLASSIFICATION OF SUBJECT MATTER**

H04B10/516(2013.01)i

According to International Patent Classification (IPC) or to both national classification and IPC

**B. FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

VCN: DWPI; ENTXT; CNKI: 单, 包络, 上包络, 下包络, 平坦, 光调制, 前传, 链路, 调制, 射频, 电光转换, 降低, 光功率, single, envelope, flat, optical, modulat+, RF, radio frequency, power

**C. DOCUMENTS CONSIDERED TO BE RELEVANT**

| Category* | Citation of document, with indication, where appropriate, of the relevant passages | Relevant to claim No. |
|---|---|---|
| A | CN 111193546 A (CHENGDU WAVETECH. CO., LTD.) 22 May 2020 (2020-05-22) description, paragraphs 15-26, and figures 1-2 | 1-58 |
| A | CN 116264483 A (HUAWEI TECHNOLOGIES CO., LTD.) 16 June 2023 (2023-06-16) entire document | 1-58 |
| A | CN 113037386 A (HUAWEI TECHNOLOGIES CO., LTD.) 25 June 2021 (2021-06-25) entire document | 1-58 |
| A | US 5850303 A (MATSUSHITA ELECTRIC INDUSTRIAL CO., LTD.) 15 December 1998 (1998-12-15) entire document | 1-58 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **08 December 2023** | **14 December 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| CN | 111193546 | A | 22 May 2020 | CN | 210780805 | U | 16 June 2020 |
| CN | 116264483 | A | 16 June 2023 | WO | 2023109488 | A1 | 22 June 2023 |
| CN | 113037386 | A | 25 June 2021 | WO | 2021115234 | A1 | 17 June 2021 |
| | | | | VN | 89122 | A | 25 August 2022 |
| | | | | EP | 4061093 | A1 | 21 September 2022 |
| | | | | US | 2022303013 | A1 | 22 September 2022 |
| | | | | CN | 115426045 | A | 02 December 2022 |
| US | 5850303 | A | 15 December 1998 | JP | 3759287 | B2 | 22 March 2006 |

Form PCT/ISA/210 (patent family annex) (July 2022)